# EUROPEAN PATENT APPLICATION

(11) **EP 4 492 892 A1**
(43) Date of publication of application: **15.01.2025**
(21) Application number: 22930279.9
(22) Date of filing: 09.03.2022
(51) Int. Cl.: H04W 72/04

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); HUANG, Lei, Singapore 049483 (SG)
(74) Representative: RGTH
(86) International application number: PCT/CN2022/080029
(87) International publication number: WO 2023/168638

(57) **Abstract**

Embodiments of this application provide a wireless communication method and a device. A first station may send, through a first BSR to a second station, buffer status report information that is based on urgency of to-be-transmitted data, so that the second station may allocate a UL MU resource according to a transmission requirement that is reported by the first station and that is based on the urgency of to-be-transmitted data, thereby meeting a transmission requirement of a delay-sensitive service. The wireless communication method includes: sending, by a first station, a first BSR to a second station, where the first BSR includes at least first status report information, and the first status report information is buffer status report information based on urgency of to-be-transmitted data.

## Description

### TECHNICAL FIELD

Embodiments of this application relates to the field of communication, and more specifically, to a wireless communication method and a device.

### BACKGROUND

A non-access point station (non-Access Point Station, non-AP STA) may proactively report a buffer status report (buffer status report, BSR), or report a BSR based on triggering from an access point station (Access Point Station, AP STA). The non-AP STA reports the BSR to assist the AP STA in allocating an uplink multi-user (multi-user, MU) resource according to an uplink (uplink, UL) transmission requirement of the non-AP STA. At present, however, the BSR reported by the non-AP STA cannot meet a transmission requirement of a delay-sensitive service.

### SUMMARY

Embodiments of this application provide a wireless communication method and a device. A first station may send, through a first BSR to a second station, buffer status report information that is based on urgency of to-be-transmitted data, so that the second station may allocate a UL MU resource according to a transmission requirement that is reported by the first station and that is based on the urgency of to-be-transmitted data, thereby meeting a transmission requirement of a delay-sensitive service.

According to a first aspect, a wireless communication method is provided, and the method includes:
sending, by a first station, a first BSR to a second station;
where the first BSR includes at least first status report information, and the first status report information is buffer status report information based on urgency of to-be-transmitted data.

According to a second aspect, a wireless communication method is provided, and the method includes:
receiving, by a second station, a first BSR sent by a first station;
where the first BSR includes at least first status report information, and the first
status report information is buffer status report information based on urgency of to-be-transmitted data.

According to a third aspect, a station device is provided, and is configured to perform the method in the first aspect.

Specifically, the station device includes a function module configured to perform the method in the first aspect.

According to a fourth aspect, a station device is provided, and is configured to perform the method in the second aspect.

Specifically, the station device includes a function module configured to perform the method in the second aspect.

According to a fifth aspect, a station device is provided, including a processor and a memory. The memory is configured to store a computer program, and the processor is configured to invoke and run the computer program stored in the memory to cause the station device to perform the method in the first aspect.

According to a sixth aspect, a station device is provided, including a processor and a memory. The memory is configured to store a computer program, and the processor is configured to invoke and run the computer program stored in the memory to cause the station device to perform the method in the second aspect.

According to a seventh aspect, an apparatus is provided, and is configured to implement the method according to any one of the first aspect and the second aspect.

Specifically, the apparatus includes a processor, configured to invoke and run a computer program from a memory, to cause a device with the apparatus installed to perform the method according to any one of the first aspect and the second aspect.

According to an eighth aspect, a computer-readable storage medium is provided, and is configured to store a computer program, where the computer program causes a computer to perform the method according to any one of the first aspect and the second aspect.

According to a ninth aspect, a computer program product is provided, including computer program instructions, where the computer program instructions cause a computer to perform the method according to any one of the first aspect and the second aspect.

According to a tenth aspect, a computer program is provided, and when the computer program is run on a computer, the computer is caused to perform the method according to any one of the first aspect and the second aspect.

According to the technical solutions described above, a first station may send, through a first BSR to a second station, buffer status report information that is based on urgency of to-be-transmitted data, so that the second station may allocate a UL MU resource according to a transmission requirement that is reported by the first station and that is based on the urgency of to-be-transmitted data, thereby meeting a transmission requirement of a delay-sensitive service.

### BRIEF DESCRIPTION OF DRAWINGS

FIG. 1 is a schematic diagram of an architecture of a communication system to which an embodiment of this application is applied.
FIG. 2 is a schematic diagram of a BSR control subfield according to this application.
FIG. 3 is a schematic diagram of possible problems in a transmission process of a delay-sensitive service according to this application.
FIG. 4 is a schematic interactive flowchart of a wireless communication method according to an embodiment of this application.
FIG. 5 is a schematic diagram of a delay expiration time difference of an MSDU or A-MSDU according to an embodiment of this application.
FIG. 6 is a schematic diagram of delay expiration time differences of STA 1, STA 2, and STA 3 according to an embodiment of this application.
FIG. 7 is a schematic diagram of a trigger type subfield according to an embodiment of this application.
FIG. 8 is a schematic diagram of a trigger dependent common information field according to an embodiment of this application.
FIG. 9 is a schematic diagram of another trigger dependent common information field according to an embodiment of this application.
FIG. 10 is a schematic diagram of a second BSR control field according to an embodiment of this application.
FIG. 11 is a schematic diagram of a third BSR control field according to an embodiment of this application.
FIG. 12 is a schematic diagram of status reporting of delay-sensitive service data in a buffer in an r-TWT service period according to an embodiment of this application.
FIG. 13 is a schematic diagram of status reporting of delay-sensitive service data in a buffer based on an AP STA triggered scheduling scenario according to an embodiment of this application.
FIG. 14 is a schematic block diagram of a station device according to an embodiment of this application.
FIG. 15 is a schematic block diagram of a station device according to an embodiment of this application.
FIG. 16 is a schematic block diagram of a communication device according to an embodiment of this application.
FIG. 17 is a schematic block diagram of an apparatus according to an embodiment of this application.
FIG. 18 is a schematic block diagram of a communication system according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. For embodiments of this application, all other embodiments obtained by a person of ordinary skill in the art without creative efforts fall within the protection scope of this application.

The technical solutions in embodiments of this application may be applied to various communication systems, for example, wireless local area networks (Wireless Local Area Networks, WLAN), wireless fidelity (Wireless Fidelity, WiFi), or other communication systems.

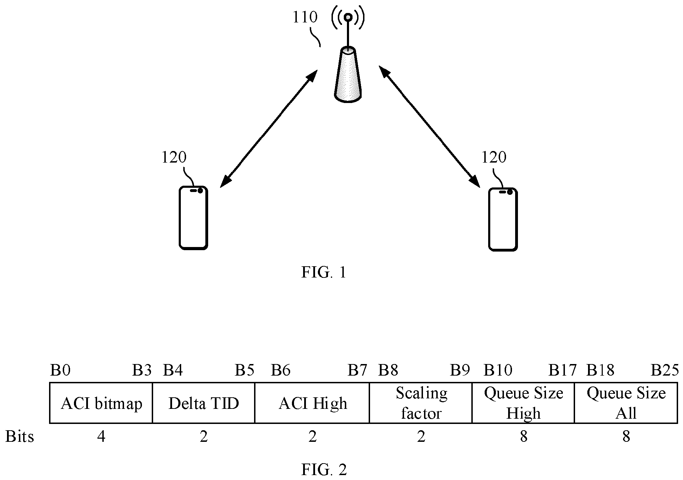

For example, a communication system 100 to which an embodiment of this application is applied is shown in FIG. 1. The communication system 100 may include an access point (Access Point, AP) 110 and stations (Station, STA) 120 that access a network through the AP 110.

In some scenarios, an AP may be referred to as an AP STA. That is, in a sense, the AP is also a STA. In some scenarios, a STA is referred to as a non-AP STA (non-AP STA).

In some embodiments, STAs may include AP STAs and non-AP STAs.

Communication in the communication system 100 may be communication between an AP and a STA, or may be communication between STAs, or communication between a STA and another STA (peer STA), where the peer STA may refer to a device that performs peer-to-peer communication with the STA, for example, the peer STA may be an AP, or may be a non-AP STA.

An AP is equivalent to a bridge that connects a wired network and a wireless network. A major function of the AP is to connect clients in a wireless network together and then connects the wireless network to an Ethernet. An AP device may be a terminal device (for example, a mobile phone) or a network device (for example, a router) that is provided with a WiFi chip.

It should be understood that a role of a STA in a communication system is not fixed. For example, in some scenarios, when a mobile phone is connected to a router, the mobile phone is a STA; when the mobile phone serves as a hotspot of another mobile phone, the mobile phone serves as an AP.

The AP and the STA may be devices applied in vehicle-to-everything; internet of things nodes, sensors, and the like in internet of things (internet of things, IoT); intelligent cameras, intelligent remote controls, intelligent water meters, intelligent electricity meters, and the like in smart home; and sensors and the like in smart city.

In some embodiments, the STA may support the 802.11be standard. The STA may alternatively support a plurality of current and future WLAN standards of the 802.11 family, such as 802.11ax, 802.11ac, 802.11n, 802.11g, 802.11b, and 802.11a.

In some embodiments, the AP may be a device that supports the 802.11be standard. The AP may alternatively be a device that supports a plurality of current and future WLAN standards of the 802.11 family, such as 802.11ax, 802.11ac, 802.11n, 802.11g, 802.11b, and 802.11a.

In some embodiments, the AP 110 and/or STA 120 may be deployed on land, including being indoors or outdoors, may be handheld, wearable, or vehicle-mounted, may be deployed on water (for example, on a ship), or may be deployed in the air (for example, on an airplane, an air balloon, or a satellite).

In embodiments of this application, the STA 120 may be a device that supports a WLAN/WiFi technology, such as a mobile phone (Mobile Phone), a pad (Pad), a computer with a wireless transceiver function, a virtual reality (Virtual Reality, VR) device, an augmented reality (Augmented Reality, AR) device, a wireless device in industrial control (industrial control), a set-top box, a wireless device in self-driving (self driving), a vehicle-mounted communication device, a wireless device in remote medical (remote medical), a wireless device in smart grid (smart grid), a wireless device in transportation safety (transportation safety), a wireless device in smart city (smart city), a wireless device in smart home (smart home), an in-vehicle communication device, a wireless communication chip/application-specific integrated circuit (application specific integrated circuit, ASIC)/system on chip (System on Chip, SoC), or the like.

By way of example rather than limitation, in embodiments of this application, the STA 120 may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide complete or partial functions without relying on a smartphone, for example, a smart watch or smart glasses, and devices that focus only on a specific type of application function and need to cooperate with another device such as a smartphone for use, for example, various smart bracelets and smart jewelries for physical sign monitoring.

Frequency bands supported in a WLAN technology may include but is not limited to a low frequency band (2.4 GHz, 5 GHz, or 6 GHz) and a high frequency band (60 GHz).

FIG. 1 exemplarily shows one AP and two STAs. In some embodiments, the communication system 100 may include a plurality of APs and another quantity of STAs. This is not limited in embodiments of this application.

It should be understood that in embodiments of this application, a device having a communication function in a network or a system may be referred to as a communication device. The communication system 100 shown in FIG. 1 is used as an example. Communication devices may include the AP 110 and the STA 120 that have a communication function. The AP 110 and the STA 120 may be specific devices described above. Details are not described herein again. The communication device may further include another device in the communication system 100, such as a network controller, a gateway, or another network entity, which is not limited in embodiments of this application.

It should be understood that the terms "system" and "network" in the specification may often be used interchangeably. In this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, the "indication" mentioned in embodiments of this application may be a direct indication or an indirect indication, or indicate an association. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

The terms used in implementations of this application are only used to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In description of embodiments of this application, the term "corresponding" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by prestoring corresponding code, tables, or other forms that may be used to indicate related information in devices (for example, including a STA and a network device), and a specific implementation thereof is not limited in this application. For example, being pre-defined may refer to being defined in a protocol.

In embodiments of this application, the "protocol" may refer to a standard protocol in the communications field, and may include, for example, a WiFi protocol, and a related protocol applied to a future WiFi communication system, which is not limited in this application.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least part of the following content.

A wireless device supports multi-band communication, for example, communication simultaneously on 2.4 GHz, 5 GHz, 6 GHz, and 60 GHz bands, or communication simultaneously on different channels of a same band (or different bands), to improve a communication throughput and/or reliability between devices. Such a device is usually referred to as a multi-band device, or a multi-link device (Multi-Link Device, MLD), and is sometimes also referred to as a multi-link entity or a multi-band entity. A multi-link device may be an access point device or a station device. If a multi-link device is an access point device, the multi-link device includes one or more APs; or if a multi-link device is a station device, the multi-link device includes one or more non-AP STAs.

To facilitate understanding of the technical solutions of embodiments of this application, related BSR mechanisms of this application are explained below.

802.11ax proposes a buffer status report (BSR) reporting mechanism and defines buffer status report information for an uplink multi-user operation (UL MU operation). A non-AP STA reports a BSR to assist an AP in allocating a UL MU resource according to an uplink transmission requirement of the non-AP STA.

The BSR mechanism includes two BSR reporting modes:
(1) Proactive reporting by a non-AP STA (unsolicited BSR): The non-AP STA may transmit a BSR in a quality of service (Quality of Service, QoS) control field (Control field) or BSR control subfield (Control subfield) of any frame transmitted to the AP.
(2) AP triggered reporting by a non-AP STA (requested BSR): The AP sends a buffer status report poll (buffer status report poll, BSRP) trigger frame (Trigger frame), and the non-AP STA may transmit a BSR in any frame transmitted to the AP in response to the BSRP trigger frame.

A buffer status reported in the QoS Control field includes a queue size for a given traffic identifier (traffic identifier, TID), and a buffer status reported in the BSR Control field includes subfield information such as an access category index (access category index, ACI) bitmap (ACI bitmap), a delta traffic identifier (delta TID), a high priority access category (ACI High), and two queue sizes (high priority queue size (Queue Size High) and all queue size (Queue Size All)), as shown in FIG. 2.

The ACI bitmap subfield indicates an access category of the reported buffer status.

The Delta TID subfield is used together with the ACI Bitmap subfield to indicate a quantity of TIDs for which the STA is reporting a buffer status.

The ACI High subfield indicates an access category (access category, AC) corresponding to a BSR indicated by the Queue Size High subfield.

The Queue Size High subfield indicates a buffer traffic size, to be sent to a specific STA, of an AC indicated by ACI High, where the specific STA is identified by a receiver address of a frame including the BSR Control subfield.

The Queue Size All subfield indicates a buffer traffic size, to be sent to a specific STA, of all ACs indicated by the ACI Bitmap subfield, where the specific STA is identified by a receiver address of a frame including the BSR Control subfield.

To facilitate understanding of the technical solutions of embodiments of this application, the following describes a restricted target wake time (Restricted Target Wake Time, r-TWT) related in this application.

The target wake time (Target Wake Time, TWT) first appeared in the 802.11ah "Wi-Fi HaLow" standard, and is used to support energy saving in a large-scale internet of things environment. In 802.11ax, the TWT mechanism adds support for trigger-based uplink transmission based on 802.11ah, thereby expanding the scope of TWT operation.

In the TWT, a time table is established between a STA and an AP (the time table is agreed upon by the STA and the AP), and the time table includes TWT time periods. When a time period negotiated by the STA and the AP arrives, the STA wakes up and waits for a trigger frame sent by the AP to exchange data. When this transmission is completed, the STA returns to a sleep mode. Each STA may negotiate independently with the AP, and each STAhas a separate TWT time period.

The TWT allows the AP to manage behavior of a basic service set (Basic Service Set, BSS) to mitigate contention between stations and reduce an awake time of a station in power management mode. This is achieved by stations operating in non-overlapping time domain and/or frequency domain and concentrating frame exchange in a predefined service period. Therefore, to ensure an application effect of the TWT, the AP generally requires that all associated stations in the BSS can join the TWT for AP scheduling. According to a TWT protocol of 802.11ax, a high-efficiency (High-Efficiency, HE) (specifically 802.11ax) AP requests all associated stations that announces to support the TWT to participate in the TWT. After receiving an indication needing a join the TWT from the AP, the non-AP station should perform individual TWT (individual TWT) protocol negotiation or join a broadcast TWT (broadcast TWT). Moreover, service periods (service period, SP) of the TWT includes a trigger-enabled SP and a non-trigger-enabled SP, and a TWT scheduling AP performs scheduling by sending a trigger frame in the trigger-enabled SP. In addition, 802.11ax stipulates that a TWT scheduled station cannot transmit a frame to the TWT scheduling AP outside a broadcast TWT SP, and in a trigger-enabled broadcast TWT, the TWT scheduled station cannot transmit a frame that does not carry an HE triggered physical layer protocol data unit (Physical layer protocol data unit, PPDU) to the TWT scheduling AP.

The r-TWT is based on the broadcast TWT. In a broadcast TWT operation, the TWT scheduling AP (TWT scheduling AP) adds a broadcast TWT element (broadcast TWT element) to a broadcast beacon frame to indicate the broadcast TWT service period (broadcast TWT SP). In the trigger-enabled service period, after obtaining a channel access opportunity through contention, the AP transmits a trigger frame or a downlink buffer unit (buffer unit, BU) to the TWT scheduled station (TWT scheduled STA).

802.11be proposes r-TWT operation to allow APs to use enhanced medium access protection and resource reservation mechanisms to provide more predictable, lower worst-case delay and jitter, and higher reliability for transmission of low-latency services. Currently, the r-TWT has mainly added two channel access rules in terms of channel access: An extremely high throughput (extremely high throughput, EHT) non-AP STA is an owner of a transmission opportunity (transmission opportunity, TXOP), and when the TXOP is obtained outside an r-TWT service period, it should be ensured that a TXOP of the non-AP STA ends before the start of any r-TWT service period; and an EHT AP schedules a quiet interval (quiet interval) overlapping with the r-TWT service period to shield operations of legacy STAs that support quiet elements (Quiet Element) in a TWT SP, but the shielded operations in the quiet interval is invalid for the EHT non-AP STA.

To facilitate understanding of the technical solutions of embodiments of this application, related delay-sensitive services and problems resolved in this application are explained below.

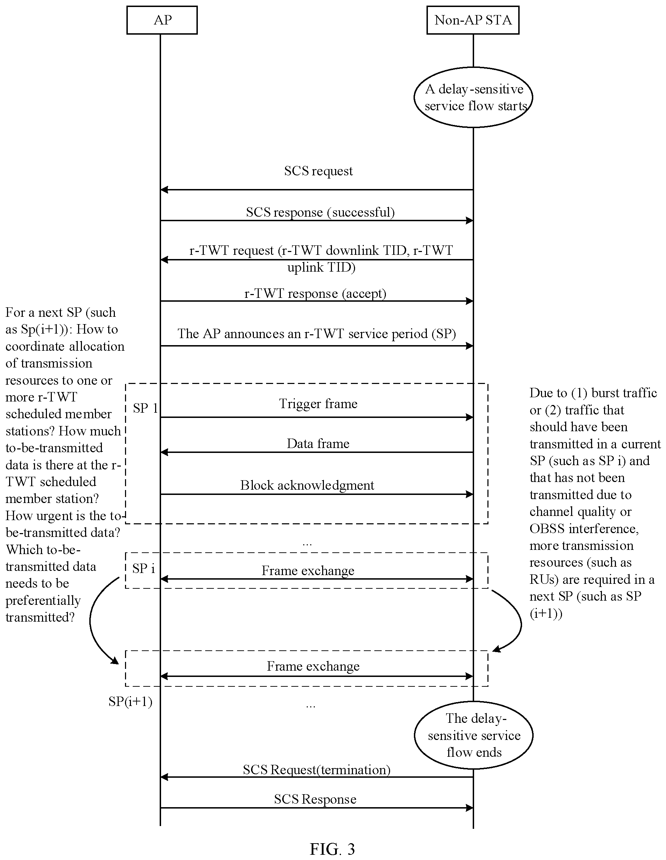

A transmission procedure of a delay-sensitive service (or low-delay service) defined by 802.11be is shown in FIG. 3. A non-AP station (non-AP STA) sends a stream classification service (stream classification service, SCS) request carrying a quality of service (Quality of Service, QoS) characteristics element to an AP. The QoS characteristics element includes recommended parameters for meeting transmission requirements of delay-sensitive services, including direction (Direction, for example, uplink), traffic identifier (TID), minimum service interval (Minimum Service Interval), maximum service interval (Maximum Service Interval), minimum data rate (Minimum Data Rate), and delay bound (Delay Bound). After the AP receives the SCS request, if the AP accepts the request, it returns an SCS request acceptance response to the non-AP STA. Then, the AP and the non-AP STA establish r-TWT based on an SCS negotiation result, and determine an uplink or downlink traffic identifier (TID) of a delay-sensitive service transmitted in a predetermined service period (service period, SP). The Non-AP STA transmits the delay-sensitive service during the predetermined service period announced by the AP. For example, the AP may specify, by sending a trigger frame, which r-TWT scheduled station performs uplink transmission, and allocate transmission resources (resource unit (resource unit, RU) or multiple resource unit (multiple resource unit, MRU), modulation and coding scheme (modulation and coding scheme, MCS), spatial streams, and the like) to each scheduled station.

It can be learned that during SCS negotiation and r-TWT establishment, only an approximate service interval range and transmission rate range are determined according to a transmission requirements of the delay-sensitive service. Moreover, the AP often coordinates and schedules transmission of delay-sensitive services of multiple r-TWT scheduled stations in a same scheduled service period, and a wireless channel environment often changes. Therefore, there is a problem of how to coordinate and schedule transmission of delay-sensitive services in real time. For the non-AP STA, due to (1) burst traffic or (2) traffic that should have been transmitted in a current service period SP (such as SP i) and that has not been transmitted due to channel quality or overlapping basic service set (Overlapping Basic Service Set, OBSS) interference, more transmission resources are required in a next SP (such as SP(i+1)). For the next SP (such as SP(i+1)), the AP needs to determine the following issues in order to coordinate allocation of transmission resources to one or more r-TWT scheduled stations: how much to-be-transmitted data is there at the r-TWT scheduled station, how urgent the to-be-transmitted data is, and which to-be-transmitted data needs to be preferentially transmitted.

A current BSR cannot provide information related to delay requirements, and cannot provide timely information related to urgency of service data transmission of delay-sensitive services. The AP cannot perform scheduling based on urgency of delay-sensitive services sent by each station. In particular, for transmission during an r-TWT SP period, it is impossible to schedule and transmit data with a delay bound requirement in real time.

Based on the foregoing problems, this application proposes a BSR reporting solution: A first station may send, through a first BSR to a second station, buffer status report information that is based on urgency of to-be-transmitted data, so that the second station may allocate a UL MU resource according to a transmission requirement that is reported by the first station and that is based on the urgency of to-be-transmitted data, thereby meeting a transmission requirement of a delay-sensitive service.

The following describes the technical solutions in this application in detail by using specific embodiments.

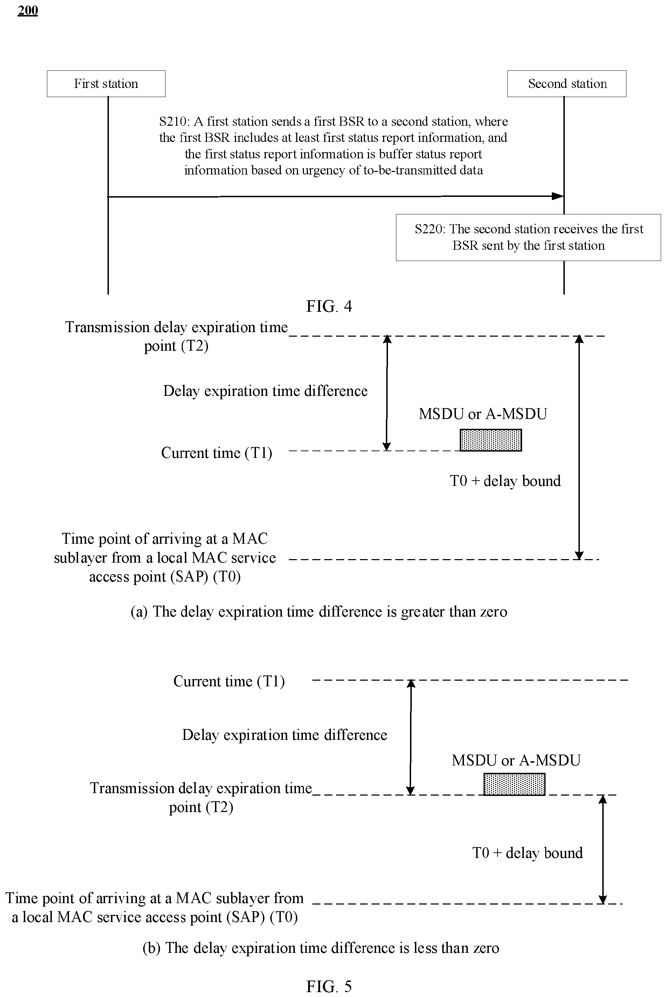

FIG. 4 is a schematic flowchart of a wireless communication method 200 according to an embodiment of this application. As shown in FIG. 4, the wireless communication method 200 may include at least part of following content:

S210: A first station sends a first BSR to a second station, where the first BSR includes at least first status report information, and the first status report information is buffer status report information based on urgency of to-be-transmitted data.

S220: The second station receives the first BSR sent by the first station.

In this embodiment of this application, the second station may allocate a UL MU resource according to a transmission requirement that is reported by the first station and that is based on the urgency of to-be-transmitted data, thereby meeting a transmission requirement of a delay-sensitive service.

In some embodiments, the first station is a non-AP STA, and the second station is an AP STA.

In some other embodiments, the first station is a non-AP STA, and the second station is another non-AP STA; or the first station is an AP STA, and the second station is another AP STA.

In some embodiments, the first BSR may be a BSR based on the urgency of the to-be-transmitted data (U-BSR).

It should be noted that in embodiments of this application, "field" may also be referred to as "field (field)" or "subfield (subfield)".

In view of the fact that a buffer status report (BSR) defined in 802.11 cannot provide information related to delay requirements and cannot provide timely information related to urgency of service data transmission for transmission of delay-sensitive services (or low-delay services), this application proposes a BSR (Urgency-based BSR, U-BSR) mechanism based on urgency of to-be-transmitted data. The solution in this application is also applicable to an operation method for reporting buffer status report information during a transmission process of services with transmission delay bound requirements.

In some embodiments, the first status report information includes status report information of delay-sensitive service data in a buffer that meets a preset urgency requirement or range.

In some embodiments, the preset urgency requirement or range may be configured or indicated by an AP STA, or the preset urgency requirement or range may be agreed upon by a protocol, or the preset urgency requirement or range may be determined by negotiation between the first station and the second station.

In some embodiments, the preset urgency requirement or range is represented based on status report information of delay-sensitive service data in a buffer with transmission delay expiration associated in a service period; or the preset urgency requirement or range is represented based on status report information of delay-sensitive service data in a buffer with transmission delay expiration associated in a scheduling period, where the scheduling period is used to schedule transmission of a delay-sensitive service. Optionally, the first status report information specifically includes at least one of the following: a data size of a delay-sensitive service whose transmission delay has expired in the buffer, or a data size of a delay-sensitive service whose transmission delay has not expired at a first moment and expires at a second moment in the buffer.

In some embodiments, the second moment is later than the first moment.

In some embodiments, the first moment is a current moment, and the second moment is one of the following: an end time point of a currently allocated service period, a start time point of a next allocated service period, and an end time of the next allocated service period; or the first moment is an end time point of a currently allocated service period, and the second moment is one of the following: a start time point of a next allocated service period, and an end time point of the next allocated service period; or the first moment is a start time point of a next allocated service period, and the second moment is an end time point of the next allocated service period.

In some embodiments, the first moment is a current moment, and the second moment is one of the following: an end time point of a current scheduling period, a start time point of a next scheduling period, and an end time point of the next scheduling period; or the first moment is an end time point of a current scheduling period, and the second moment is one of the following: a start time point of a next scheduling period, and an end time point of a next scheduling period; or the first moment is a start time point of a next scheduling period, and the second moment is an end time point of the next scheduling period; where the scheduling period is used to schedule transmission of the delay-sensitive service.

In some implementations, in a case that content of the buffer status report information differentiated based on urgency of to-be-transmitted delay-sensitive service data is represented based on status report information of delay-sensitive service data in a buffer with transmission delay expiration at a corresponding moment of a service period or a scheduling period, the first BSR may be carried by a BSR control subfield that is based on the urgency of the to-be-transmitted data. The BSR control subfield that is based on the urgency of the to-be-transmitted data may include at least one of the following information:
a traffic size of all to-be-transmitted delay-sensitive service data in the buffer;
a traffic size of to-be-transmitted delay-sensitive service data whose delay in the buffer has expired at the current moment;
a traffic size of to-be-transmitted delay-sensitive service data whose delay has not expired at the current moment but will expire at a given time point T1 in the buffer;
a traffic size of to-be-transmitted delay-sensitive service data whose delay has not expired at the time point T1 but will expire at a time point T2 (T2>T1, that is, T2 is later than T1) in the buffer; or
a traffic size of to-be-transmitted delay-sensitive service data whose delay has not expired at the time point T2 but will expire at a time point T3 (T3>T2, that is, T3 is later than T2) in the buffer.

The delay-sensitive service data may be indicated by service data with a target TID (or AC). For example, for a station that has established r-TWT, r-TWT DL TID(s) or r-TWT UL TID(s) corresponding to a successfully established r-TWT is/are used as a TID of the delay-sensitive service. For a station that has established r-TWT and is allocated with a r-TWT service period, the time point T1 may be set to an end time point of a currently allocated (scheduled) service period, the time point T2 may be set to a start time point of a next allocated (scheduled) service period, and the time point T3 may be set to an end time point of the next allocated (scheduled) service period. Alternatively, the time points T1, T2, and T3 may be preset.

In some embodiments, the service period is an r-TWT service period, and the first station is an r-TWT scheduled station.

In some embodiments, a transmission delay expiration time point is a time point when duration of a delay bound elapses after a time point at which a media access control service data unit (Media Access Control Service Data Unit, MSDU) or an aggregate media access control service data unit (Aggregate Media Access Control Service Data Unit, A-MSDU) belonging to a delay-sensitive service flow arrives at a MAC sublayer from a local Media Access Control (Media Access Control, MAC) service access point (SAP), where the delay bound (Delay bound) is maximum duration allowed for transmission of the MSDU or A-MSDU.

In some embodiments, that the transmission delay has expired means that a delay expiration time difference of a to-be-transmitted MSDU or A-MSDU relative to the current moment is less than or equal to zero, or that the transmission delay has expired means that a delay expiration time difference of a to-be-transmitted MSDU or A-MSDU relative to the current moment is less than a delay expiration deviation threshold. That is, the to-be-transmitted MSDU or A-MSDU has not been transmitted when the delay bound (Delay bound) elapses after the time point at which the MSDU or A-MSDU arrives at the MAC sublayer from the MAC SAP, or the to-be-transmitted MSDU or A-MSDU has not been transmitted when a delay bound-delay expiration deviation threshold (Delay bound-Expire Deviation Threshold) elapses after the time point at which the MSDU or A-MSDU arrives at the MAC sublayer from the MAC SAP.

In some embodiments, the transmission delay expiration means that a delay expiration time difference of a to-be-transmitted MSDU or A-MSDU relative to a target moment is less than or equal to zero, or the transmission delay expiration means that a delay expiration time difference of a to-be-transmitted MSDU or A-MSDU relative to a target moment is less than a delay expiration deviation threshold. The target moment is a specific time after the current moment.

In some embodiments, that the transmission delay has not expired means that a delay expiration time difference of a to-be-transmitted MSDU or A-MSDU relative to a target moment is greater than zero, or that the transmission delay has not expired means that a delay expiration time difference of a to-be-transmitted MSDU or A-MSDU relative to the target moment is greater than or equal to a delay expiration deviation threshold. That is, a transmission waiting time starting from the time point at which the MSDU or A-MSDU arrives at the MAC sublayer from the MAC SAP is less than a delay bound (Delay bound) or less than a bound delay-delay expiration deviation threshold (Delay bound-Expire Deviation Threshold). The target moment is a specific time after the current moment.

In some embodiments, the delay expiration deviation threshold is a time interval between a start point of transmission and a time point of confirmed successful transmission of the MSDU or A-MSDU.

In some embodiments, the preset urgency requirement or range is represented based on status report information of delay-sensitive service data in a buffer with a delay expiration time difference bound (TimetoDelayExpire Bound) range. Optionally, the first status report information specifically includes a data size of a delay-sensitive service, whose delay expiration time difference is less than or equal to the delay expiration time difference bound, in a buffer.

In some embodiments, the delay expiration time difference bound is configured or indicated by the AP STA, or the delay expiration time difference bound is agreed upon by a protocol.

In some embodiments, the delay expiration time difference is a time difference of the delay-sensitive service data between the current moment and a transmission delay expiration time point of the delay-sensitive service data; or the delay expiration time difference is a time difference of the delay-sensitive service data between a target moment and a transmission delay expiration time point of the delay-sensitive service data. The target moment is a specific time after the current moment.

In some implementations, in a case that content of the buffer status report information differentiated based on urgency of to-be-transmitted delay-sensitive service data is represented based on status report information of delay-sensitive service data in a buffer with a delay expiration time difference bound (TimetoDelayExpire Bound) range, the first BSR may be carried by a BSR control subfield that is based on the urgency of the to-be-transmitted data. The BSR control subfield (U-BSR Control subfield) that is based on the urgency of the to-be-transmitted data may include an indication of a range of urgency that needs to be met by buffer data requiring reporting of status report information, and is used to indicate reporting of status report information corresponding to a delay-sensitive service MSDU or A-MSDU, whose delay expiration time difference is less than or equal to the delay expiration time difference bound, in the buffer.

It should be noted that the delay expiration time difference (Time to delay expire) may also be referred to as a time to a delay expiration point, and specifically refers to a time difference between the current moment and a transmission delay expiration time point of an MSDU or A-MSDU for a specific service flow (traffic flow), as shown in FIG. 5. It may be stipulated that: when the transmission delay expiration time point of the MSDU or A-MSDU is later than the current moment, the delay expiration time difference thereof is greater than zero; or when the transmission delay expiration time point of the MSDU or A-MSDU is earlier than the current moment, the delay expiration time difference thereof is less than zero. Alternatively, the delay expiration time difference (Time to delay expire) specifically refers to a time difference between a target moment and a transmission delay expiration time point of an MSDU or A-MSDU for a specific service flow (traffic flow). It may be stipulated that: when the transmission delay expiration time point of the MSDU or A-MSDU is later than the target moment, the delay expiration time difference thereof is greater than zero; or when the transmission delay expiration time point of the MSDU or A-MSDU is earlier than the target moment, the delay expiration time difference thereof is less than zero. The mentioned delay expiration time point refers to a time point when a delay bound (delay bound) elapses after an MSDU or A-MSDU belonging to a specific service flow arrives at the MAC sublayer from the local MAC SAP. The delay bound refers to maximum time duration allowed for transmission of the MSDU or A-MSDU, which is measured as duration from a time at which an MSDU or a 1^{st} MSDU of an A-MSDU arrives at the MAC sublayer from the MAC SAP to a time at which the MSDU or A-MSDU is successfully transmitted (or retransmitted) to a destination. The delay expiration time difference of the MSDU or A-MSDU may indicate urgency of transmission of the MSDU or A-MSDU. A smaller delay expiration time difference within a time to live (time to live, TTL) of the MSDU or A-MSDU indicates higher urgent of transmission of the MSDU or A-MSDU.

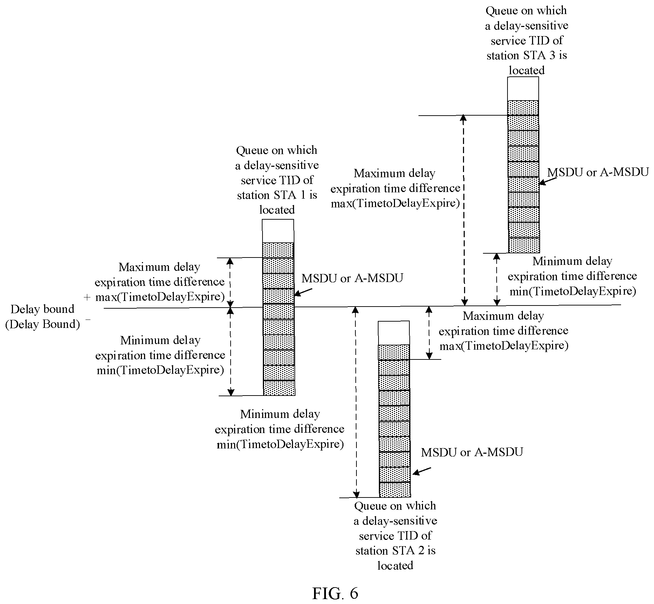

For example, as shown in FIG. 6, it is assumed that there are three stations STA 1, STA 2, and STA 3 among the stations associated with an AP, all of which have delay-sensitive service data for uplink transmission. A delay expiration time difference may be used to reflect urgency of an MSDU or A-MSDU corresponding to a delay-sensitive service TID to be sent by each station at a specific moment. If the AP can obtain statistical information, included in buffer status report information of each station, of the delay expiration time difference of the MSDU or A-MSDU corresponding to the delay-sensitive service TID, an MSDU or A-MSDU with higher urgency can be preferentially transmitted. In FIG. 6, a delay expiration time difference of an MSDU or A-MSDU corresponding to a delay-sensitive service TID of STA 2 is less than zero, indicating that urgency of transmission of the MSDU or A-MSDU is high. A delay expiration time difference of an MSDU or A-MSDU corresponding to a delay-sensitive service TID of STA 3 is greater than zero, and therefore urgency of transmission of the MSDU or A-MSDU is low. STA 2 has both an MSDU or A-MSDU whose delay expiration time difference is greater than zero and an MSDU or A-MSDU whose delay expiration time difference is less than zero. In FIG. 6, delay bounds (Delay bound) of MSDUs or A-MSDUs corresponding to delay-sensitive services TIDs of the stations may be different.

In some embodiments, data associated with the first status report information is data of an MSDU or A-MSDU corresponding to a target TID of a target access category (access category, AC) in a buffer; and/or data associated with the first status report information is data of an MSDU or A-MSDU corresponding to a target TID in a buffer. The target AC is an AC to which a TID of the delay-sensitive service belongs, and the target TID is a TID of the delay-sensitive service.

In some embodiments, the first status report information specifically includes at least one of the following: a data size of a delay-sensitive service whose transmission delay has expired in the buffer, a data size of a delay-sensitive service whose transmission delay in the buffer has not expired at a first moment and expires at a second moment, or a data size of a delay-sensitive service whose delay expiration time difference is less than or equal to the delay expiration time difference bound.

In some embodiments, the foregoing step S210 specifically includes:

The first station sends the first BSR to the second station in a service period; or the first station sends the first BSR to the second station outside a service period; or the first station sends the first BSR to the second station in a scheduling period in which the second station schedules transmission of the delay-sensitive service; or the first station sends the first BSR to the second station between two scheduling periods in which the second station schedules transmission of the delay-sensitive service.

In some embodiments, an r-TWT protocol is established between the first station and the second station, the service period is an r-TWT service period, and the first station is an r-TWT scheduled station corresponding to the r-TWT service period.

In some embodiments, the foregoing step S210 specifically includes:

The first station sends the first BSR to the second station after the first station establishes an SCS stream by sending an SCS request carrying a QoS characteristics element, where the QoS characteristics element includes a recommended parameter for meeting a transmission requirement of the delay-sensitive service. Specifically, for example, the recommended parameter for meeting the transmission requirement of the delay-sensitive services includes at least one of the following: a direction, a TID, a minimum service interval, a maximum service interval, a minimum data rate, or a delay bound (delay bound).

That is, the delay bound (delay bound) described in embodiments of this application may be determined by the second station based on the QoS characteristics element sent by the first station and fed back to the first station. In other words, the delay bound (delay bound) may be determined by negotiation between the first station and the second station.

In some embodiments, the foregoing step S210 specifically includes:

The first station proactively sends the first BSR to the second station; or
the first station sends the first BSR to the second station based on triggering from the second station.

In some embodiments, in a case that the first station proactively sends the first BSR to the second station, the first station adds the first BSR to a BSR control subfield that is based on the urgency of the to-be-transmitted data and that is in any frame to be transmitted to the second station. In this case, the first station is a non-AP STA, and the second station is another non-AP STA; or the first station is an AP STA, and the second station is another AP STA.

In some embodiments, in a case that the first station sends the first BSR to the second station based on the triggering from the second station, a trigger frame sent by the second station is a buffer status report poll (urgency-based buffer status report poll, U-BSRP) trigger frame based on the urgency of the to-be-transmitted data. In this case, the first station is a non-AP STA, and the second station is an AP STA.

In some embodiments, the first station adds, according to a preset urgency requirement or range indicated in the trigger frame, the first BSR to a new BSR control subfield variant (BSR control subfield variant) of any frame to be transmitted to the second station in response to the trigger frame. That is, the non-AP STA adds, according to a preset urgency requirement or range indicated in the trigger frame sent by the AP STA, the first BSR to a new BSR control subfield variant of any frame to be transmitted to the AP STA in response to the trigger frame.

In some embodiments, the first station adds, according to a preset urgency requirement or range indicated in the trigger frame, the first BSR to a BSR control subfield that is based on the urgency of the to-be-transmitted data and that is in any frame to be transmitted to the second station in response to the trigger frame.

In some embodiments, the trigger frame includes but is not limited to at least one of the following: indication information for indicating the preset urgency requirement or range, indication information for indicating whether to trigger reporting of status report information of all delay-sensitive service data in the buffer, or indication information for indicating whether to represent the preset urgency requirement or range based on a service period.

Specifically, for example, in a scenario in which the AP STA triggers a non-AP STA to report, when the U-BSRP trigger frame indicates the delay expiration time difference bound (TimetoDelayExpire Bound), and a related non-AP STA that triggers transmission of the delay-sensitive service reports a size of delay-sensitive service data, whose delay expiration time difference is less than or equal to the TimetoDelayExpire Bound, in the buffer, after receiving the U-BSRP trigger frame, the relevant non-AP STA transmits the U-BSR in any frame transmitted to the AP STA in response to the U-BSRP trigger frame, and reports a size of delay-sensitive service data, whose delay expiration time difference is less than or equal to the TimetoDelayExpire Bound, in the buffer. When the U-BSRP trigger frame instructs the related non-AP STA performing delay-sensitive service transmission to report status report information of delay-sensitive service data in a buffer with transmission delay expiration at a corresponding moment of a service period or a scheduling period, after receiving the U-BSRP trigger frame, the related non-AP STA transmits the U-BSR in any frame transmitted to the AP STA in response to the U-BSRP trigger frame, and reports the status report information of the delay-sensitive service data in the buffer with transmission delay expiration at the corresponding moment of the service period or the scheduling period.

In some embodiments, the trigger frame includes a trigger type field, where the trigger type field is used to indicate that the trigger frame is a buffer status report poll trigger frame based on the urgency of the to-be-transmitted data.

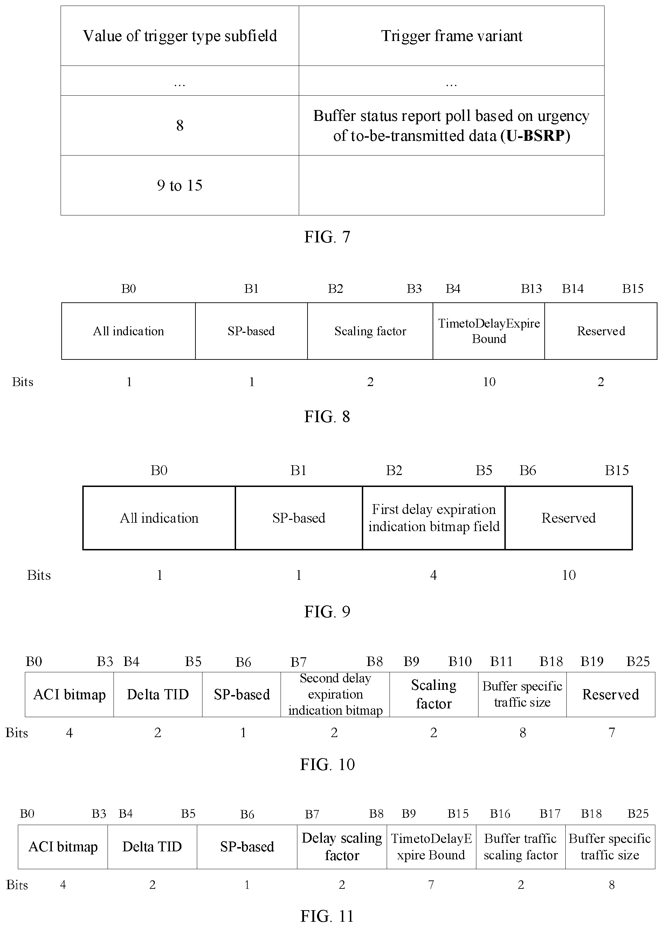

Specifically, for example, the trigger frame is a U-BSRP trigger frame, and the trigger type field is a trigger type subfield (Trigger Type subfield), as shown in FIG. 7; and a value of the trigger type subfield (Trigger Type subfield value) is 8, which is used to indicate that a trigger frame variant (Trigger frame variant) is a buffer status report poll (U-BSRP) based on the urgency of the to-be-transmitted data. Certainly, the trigger type subfield may alternatively be set to another value to indicate that the trigger frame variant (Trigger frame variant) is a buffer status report poll (U-BSRP) based on the urgency of the to-be-transmitted data, and this is not limited in embodiments of this application.

In some embodiments, the trigger frame includes a trigger dependent common information field, where the trigger dependent common information field includes at least one of the following: an all indication (ALL indication) field, a service period-based field (SP-based) field, a scaling factor (Scaling factor) field, or a delay expiration time difference bound (TimetoDelayExpireBound) field. The trigger dependent common information field may be specifically shown in FIG. 8.

In some embodiments, the trigger frame includes a trigger dependent common information field, where the trigger dependent common information field includes at least one of the following: an all indication (ALL indication) field, a service period-based field (SP-based) field, or a first delay expiration indication bitmap (delay expire Indication Bitmap) field. The trigger dependent common information field may be specifically shown in FIG. 9.

Specifically, in the trigger dependent common information field, the all indication field is used to indicate whether to trigger status report information of all delay-sensitive service data in a buffer of the first station, the service period-based field is used to indicate whether to represent the preset urgency requirement or range based on the service period, the scaling factor field is used to indicate a unit of the delay expiration time difference bound field, the delay expiration time difference bound field is used to indicate a preset urgency requirement or range needing to be met by buffer data corresponding to to-be-reported status report information, and the first delay expiration indication bitmap field is used to indicate the preset urgency requirement or range needing to be met by the buffer data corresponding to the to-be-reported status report information.

In some embodiments, the trigger frame is a U-BSRP trigger frame, and the trigger dependent common information field is a trigger dependent common information subfield (Trigger Dependent Common Info subfield). Specifically, an EHT variant common information field (EHT variant Common Info field) of the U-BSRP trigger frame carries the trigger dependent common information subfield (Trigger Dependent Common Info subfield).

Specifically, for example, the scaling factor (Scaling factor) field may be shown in Table 1, and a time unit (time unit, TU) may be, for example, 1024 us.

**Table 1**

| **Value of scaling factor field** | **Scaling factor (multiple of TUs)** |
|---|---|
| 0 | 1 |
| 1 | 2 |
| 2 | 3 |
| 3 | 4 |

It should be noted that the foregoing Table 1 is merely an example, and the value of the scaling factor field and the corresponding scaling factor may also be other values, which is not limited in this application.

In some embodiments, the all indication field is set to a first value, indicating triggering of status report information, reported by the first station, of all delay-sensitive service data in the buffer; or the all indication field is set to a second value, indicating triggering of status report information, reported by the first station, of delay-sensitive service data in the buffer that meets the preset urgency requirement or range. For example, the all indication (ALL indication) field is set to a first value of 0, indicating triggering of status report information, reported by the first station, of all delay-sensitive service data in the buffer; or the all indication (ALL indication) field is set to a first value of 1, indicating triggering of status report information, reported by the first station, of delay-sensitive service data in the buffer that meets the preset urgency requirement or range. For another example, the all indication (ALL indication) field is set to a first value of 1, indicating triggering of status report information, reported by the first station, of all delay-sensitive service data in the buffer; or the all indication (ALL indication) field is set to a first value of 0, indicating triggering of status report information, reported by the first station, of delay-sensitive service data in the buffer that meets the preset urgency requirement or range.

In some embodiments, the delay expiration time difference bound field indicates status report information reported by the first station and corresponding to delay-sensitive service data, whose delay expiration time difference is less than or equal to the delay expiration time difference bound, in the buffer.

In some embodiments, the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the first delay expiration indication bitmap field is set to a third value, indicating buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the first delay expiration indication bitmap field is set to a fourth value, indicating buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

Optionally, the target AC may include one or more ACs, and the target TID may include one or more TIDs.

Specifically, for example, the first delay expiration indication bitmap field may be shown in Table 2, the target AC is an AC to which the TID of the delay-sensitive service belongs, and the target TID is a TID of the delay-sensitive service; the target AC may include one or more ACs, and the target TID may include one or more TIDs; and the service period is an r-TWT service period, and the first station is an r-TWT scheduled station.

**Table 2**

| **Value of first delay expiration indication bitmap field** | **Indicating preset urgency range needing to be met by buffer data requiring reporting of status report information** |
|---|---|
| 0000 | Reserved |
| 0001 | Buffer traffic corresponding to a target TID or a target TID of a target AC whose transmission delay has expired at the current moment. |
| 0010 | Buffer traffic corresponding to a target TID or a target TID of a target AC whose transmission delay has not expired at a first moment and expires at a second moment; |
| | where the first moment is a current moment, and the second moment is one of the following: an end time point of a currently allocated service period, a start time point of a next allocated service period, and an end time of the next allocated service period. |
| 0100 | Buffer traffic corresponding to a target TID or a target TID of a target AC whose transmission delay has not expired at a first moment and expires at a second moment; |
| | where the first moment is an end time point of a currently allocated service period, and the second moment is one of the following: a start time point of a next allocated service period, and an end time point of the next allocated service period. |
| 1000 | Buffer traffic corresponding to a target TID or a target TID of a target AC whose transmission delay has not expired at a first moment and expires at a second moment; where the first moment is a start time point of a next allocated service period, and the second moment is an end time point of the next allocated service period. |

It should be noted that in the foregoing Table 2, the first delay expiration indication bitmap field occupies 4 bits, a first value of the first delay expiration indication bitmap field is 0001, a second value of the first delay expiration indication bitmap field is 0010, a third value of the first delay expiration indication bitmap field is 0100, and a fourth value of the first delay expiration indication bitmap field is 1000. Certainly, values corresponding to the first value to the fourth value of the first delay expiration indication bitmap field may also be other values, and the first delay expiration indication bitmap field may also occupy another quantity of bits. That is, the content shown in the foregoing Table 2 is merely an example, and this application is not limited thereto.

In some embodiments, the first delay expiration indication bitmap field is set to the first value, indicating buffer traffic corresponding to a target TID or a target TID of a target AC whose transmission delay has expired at the current moment;
the first delay expiration indication bitmap field is set to the second value, indicating buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the first delay expiration indication bitmap field is set to the third value, indicating buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the first delay expiration indication bitmap field is set to the fourth value, indicating buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

For details, refer to the foregoing Table 2. Details are not described herein again.

In some embodiments, the service period-based field is set to a first value, indicating that the preset urgency requirement or range is not represented based on a service period, and the scaling factor field and the delay expiration time difference bound field are used to represent the preset urgency requirement or range; or the service period-based field is set to a second value, indicating that the preset urgency requirement or range is represented based on a service period, and the first delay expiration indication bitmap field is used to represent the preset urgency requirement or range.

For example, the service period-based field is set to 0, indicating that the preset urgency requirement or range is not represented based on a service period, and the scaling factor field and the delay expiration time difference bound field are used to represent the preset urgency requirement or range; or the service period-based field is set to 1, indicating that the preset urgency requirement or range is represented based on a service period, and the first delay expiration indication bitmap field is used to represent the preset urgency requirement or range. For another example, the service period-based field is set to 1, indicating that the preset urgency requirement or range is not represented based on a service period, and the scaling factor field and the delay expiration time difference bound field are used to represent the preset urgency requirement or range; or the service period-based field is set to 0, indicating that the preset urgency requirement or range is represented based on a service period, and the first delay expiration indication bitmap field is used to represent the preset urgency requirement or range.

In some embodiments, the first status report information in the first BSR reported by the first station includes a buffer status report related to the delay-sensitive service, and the buffer status report carries buffer data size information that is related to a delay-sensitive service MSDU or A-MSDU of a target AC or a target TID buffered by the first station and that meets the preset urgency requirement or range. In embodiments of this application, two related frame control subfields carrying the first BSR are introduced: One subfield defines a new BSR control subfield variant (BSR control subfield) carrying the first BSR, redefines related subfield content included in the BSR control subfield, and is used for application of the BSR control subfield in specific scenario. The other subfield defines a newly added U-BSR control subfield (U-BSR control subfield) carrying the first BSR.

In some embodiments, the first BSR is carried in a first BSR control field;
where the first BSR control field includes at least one of the following: an access category index bitmap field, a delta traffic identifier field, a high priority access category index field, a first queue field, or a second queue field;
the access category index bitmap (ACI bitmap) field is used to indicate an AC to which a TID of a delay-sensitive service with a reported buffer status belongs, the delta traffic identifier (Delta TID) field and the access category index bitmap (ACI bitmap) field are used together to indicate a quantity of TIDs of a delay-sensitive service with a buffer status being reported by the first station, the high priority access category index (ACI High) field is used to indicate an AC to which a TID of a delay-sensitive service corresponding to a BSR indicated by the first queue field belongs, the first queue field is used to indicate a buffer traffic size that is to be sent to a target device and meets the preset urgency requirement or range and that corresponds to a TID of a delay-sensitive service in an AC indicated by the high priority access category field, and the second queue field is used to indicate a buffer traffic size that is to be sent to the target device and meets the preset urgency requirement or range and that corresponds to TIDs of delay-sensitive services in all ACs indicated by the access category index bitmap field; and
the target device is identified by a receiver address of a frame including the first BSR control field, and the preset urgency requirement or range is indicated by the trigger frame sent by the second station.

In some embodiments, the first BSR control field is a new BSR control subfield variant (BSR control subfield variant).

In some embodiments, the first BSR is carried in the first BSR control field in a case that the first station receives the trigger frame sent by the second station and the trigger frame instructs the first station to report a buffer status report that is based on the urgency of the to-be-transmitted data. That is, the first station determines to use the new BSR control subfield variant to report the first BSR in a case that the first station receives the trigger frame sent by the second station and the trigger frame instructs the first station to report a buffer status report that is based on the urgency of the to-be-transmitted data.

In other words, the new BSR control subfield variant carrying U-BSR information is used to respond to the U-BSRP trigger frame. When a station receives a U-BSRP trigger frame and the trigger frame instructs the station to report a U-BSR, the station uses a new BSR control subfield variant instead of the BSR control subfield defined in 802.11ax to report the U-BSR.

Specifically, for example, the first queue field may be a high priority queue size (Queue Size High) field, and the second queue field may be an all queue size (Queue Size All) field.

Specifically, for example, in the first BSR control field, the access category index bitmap (ACI bitmap) field is used to indicate an AC to which a TID of a delay-sensitive service with a reported buffer status belongs. In addition to being the AC to which the TID of the delay-sensitive service belongs, the indicated AC has other definitions consistent with the ACI bitmap of the BSR control subfield (BSR control subfield) in IEEE 802.11ax. Details are not described herein again.

Specifically, for example, in the first BSR control field, the delta traffic identifier (Delta TID) field is used together with the access category index bitmap (ACI bitmap) field to indicate a quantity of TIDs of delay-sensitive services with buffer statuses being reported by the first station. In addition to being the TID of the delay-sensitive service, the indicated TID has other definitions consistent with the Delta TID of the BSR control subfield (BSR control subfield) in IEEE 802.11ax. Details are not described herein again.

Specifically, for example, in the first BSR control field, the high priority access category index (ACI High) field is used to indicate an AC to which a TID of a delay-sensitive service corresponding to a BSR indicated by the first queue field belongs. In addition to being the AC to which the TID of the delay-sensitive service belongs, the indicated AC has other definitions consistent with ACI High of the BSR control subfield in IEEE 802.11ax. Details are not described herein again.

In some embodiments, the first BSR is carried in a second BSR control field;
the second BSR control field includes at least one of the following: an access category index bitmap field, a delta traffic identifier field, a service period-based field, a second delay expiration indication bitmap field, a scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the second delay expiration indication bitmap field is used to indicate target buffer traffic associated with TIDs of delay-sensitive services in all ACs indicated by the buffer specific traffic size field, the scaling factor field is used to indicate a unit corresponding to the buffer specific traffic size field, and the buffer specific traffic size field is used to indicate a buffer traffic size that is to be sent to a target device and meets the preset urgency requirement or range and that corresponds to the TIDs of the delay-sensitive services in all the ACs indicated by the access category index bitmap field; and
the target device is identified by a receiver address of a frame including the second BSR control field, and the preset urgency requirement or range is indicated by the second delay expiration indication bitmap field.

In some embodiments, the second BSR control field is a BSR control subfield based on urgency of to-be-transmitted data. Specifically, the second BSR control field may be shown in FIG. 10.

In some embodiments, the second BSR control field may be a newly added aggregate control subfield (A-Control subfield) variant, and the second BSR control field may be used for both U-BSR reporting in response to a U-BSRP trigger frame (that is, the first station sends the first BSR to the second station based on triggering from the second station) and unsolicited U-BSR reporting (that is, the first station proactively sends the first BSR to the second station).

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

Specifically, for example, the second delay expiration indication bitmap field may be shown in Table 3, the target AC is an AC to which the TID of the delay-sensitive service belongs, and the target TID is a TID of the delay-sensitive service; the target AC may include one or more ACs, and the target TID may include one or more TIDs; and the service period is an r-TWT service period, and the first station is an r-TWT scheduled station.

**Table 3**

| **Value of second delay expiration indication bitmap field** | Indicating target buffer traffic associated with TIDs of delay-sensitive services in all ACs indicated by the buffer specific traffic size field |
|---|---|
| 0000 | The target buffer traffic is buffer traffic corresponding to all target TIDs or target TIDs of all target ACs. |
| 0001 | The target buffer traffic is buffer traffic corresponding to a target TID or a target TID of a target AC whose transmission delay has expired at the current moment. |
| 0010 | The target buffer traffic is buffer traffic corresponding to a target TID or a target TID of a target AC whose transmission delay has not expired at a first moment and expires at a second moment; |
| | where the first moment is a current moment, and the second moment is an end time point of a currently allocated service period, a start time point of a next allocated service period, or an end time of the next allocated service period. |
| 0100 | The target buffer traffic is buffer traffic corresponding to a target TID or a target TID of a target AC whose transmission delay has not expired at a first moment and expires at a second moment; |
| | where the first moment is an end time point of a currently allocated service period, and the second moment is one of the following: a start time point of a next allocated service period, and an end time point of the next allocated service period. |
| 1000 | The target buffer traffic is buffer traffic corresponding to a target TID or a target TID of a target AC whose transmission delay has not expired at a first moment and expires at a second moment; |
| | where the first moment is a start time point of a next allocated service period, and the second moment is an end time point of the next allocated service period. |

It should be noted that in the foregoing Table 3, the second delay expiration indication bitmap field occupies 4 bits, a first value of the second delay expiration indication bitmap field is 0000, a second value of the second delay expiration indication bitmap field is 0001, a third value of the second delay expiration indication bitmap field is 0010, a fourth value of the second delay expiration indication bitmap field is 0100, and a fifth value of the second delay expiration indication bitmap field is 1000. Certainly, values corresponding to the first value to the fifth value of the second delay expiration indication bitmap field may also be other values, and the second delay expiration indication bitmap field may also occupy another quantity of bits. That is, the content shown in the foregoing Table 3 is merely an example, and this application is not limited thereto.

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

For details, refer to the foregoing Table 3. Details are not described herein again.

Specifically, for example, in the second BSR control field, the access category index bitmap (ACI bitmap) field is used to indicate an AC to which a TID of a delay-sensitive service with a reported buffer status belongs. In addition to being the AC to which the TID of the delay-sensitive service belongs, the indicated AC has other definitions consistent with the ACI bitmap of the BSR control subfield (BSR control subfield) in IEEE 802.11ax. Details are not described herein again.

Specifically, for example, in the second BSR control field, the delta traffic identifier (Delta TID) field is used together with the access category index bitmap (ACI bitmap) field to indicate a quantity of TIDs of delay-sensitive services with buffer statuses being reported by the first station. In addition to being the TID of the delay-sensitive service, the indicated TID has other definitions consistent with the ACI bitmap of the BSR control subfield (BSR control subfield) in IEEE 802.11ax. Details are not described herein again.

For example, in the second BSR control field, the service period-based field is used to indicate whether the preset urgency requirement or range is represented based on a service period, for example, for an r-TWT, whether the preset urgency requirement or range is represented based on an r-TWT service period. Specifically, the field may occupy 1 bit. When a value of the field is 0, it indicates that the preset urgency requirement or range is not represented based on the service period, and the scaling factor field and the delay expiration time difference bound field are used to represent the preset urgency requirement or range; or when a value of the field is 1, it indicates that the preset urgency requirement or range is represented based on the service period, and the second delay expiration indication bitmap field is used to represent the specific urgency requirement or range. Alternatively, when a value of the field is 1, it indicates that the preset urgency requirement or range is not represented based on the service period, and the scaling factor field and the delay expiration time difference bound field are used to represent the preset urgency requirement or range; or when a value of the field is 0, it indicates that the preset urgency requirement or range is represented based on the service period, and the second delay expiration indication bitmap field is used to represent the specific urgency requirement or range.

In some embodiments, the first BSR is carried in a third BSR control field;
the third BSR control field includes at least one of the following: an access category index bitmap field, a delta traffic identifier field, a service period-based field, a delay expiration time difference bound field, a delay scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the delay scaling factor field is used to indicate a unit corresponding to the delay expiration time difference bound field, and the delay expiration time difference bound field is used to indicate a preset urgency requirement or range needing to be met by buffer data corresponding to to-be-reported status report information, the buffer traffic scaling factor field is used to indicate a unit corresponding to the buffer specific traffic size field, and the buffer specific traffic size field is used to indicate a buffer traffic size that is to be sent to a target device and meets the preset urgency requirement or range and that corresponds to TIDs of delay-sensitive services in all ACs indicated by the access category index bitmap field; and
the target device is identified by a receiver address of a frame including the third BSR control field, and the preset urgency requirement or range is indicated by the delay expiration time difference bound field.

In some embodiments, the third BSR control field is a BSR control subfield based on urgency of to-be-transmitted data. Specifically, the third BSR control field may be as shown in FIG. 11.

In some embodiments, the third BSR control field may be a newly added aggregate control subfield (A-Control subfield) variant, and the third BSR control field may be used for both U-BSR reporting in response to a U-BSRP trigger frame (that is, the first station sends the first BSR to the second station based on triggering from the second station) and unsolicited U-BSR reporting (that is, the first station proactively sends the first BSR to the second station).

In some embodiments, in the third BSR control field, the delay expiration time difference bound field indicates status report information reported by the first station and corresponding to delay-sensitive service data, whose delay expiration time difference is less than or equal to the delay expiration time difference bound, in the buffer. The delay expiration time difference bound field is in units of TUs.

In some embodiments, the delay scaling factor field may be shown in Table 4, and the TU may be, for example, 1024 us.

**Table 4**

| **Value of delay scaling factor field** | **Delay scaling factor (multiple of TUs)** |
|---|---|
| 0 | 1 |
| 1 | 2 |
| 2 | 3 |
| 3 | 4 |

It should be noted that the foregoing Table 4 is merely an example, and the value of the delay scaling factor field and the corresponding delay scaling factor may also be other values, which is not limited in this application.

Specifically, for example, in the third BSR control field, the access category index bitmap (ACI bitmap) field is used to indicate an AC to which a TID of a delay-sensitive service with a reported buffer status belongs. In addition to being the AC to which the TID of the delay-sensitive service belongs, the indicated AC has other definitions consistent with the ACI bitmap of the BSR control subfield (BSR control subfield) in IEEE 802.11ax. Details are not described herein again.

Specifically, for example, in the third BSR control field, the delta traffic identifier (Delta TID) field is used together with the access category index bitmap (ACI bitmap) field to indicate a quantity of TIDs of delay-sensitive services with buffer statuses being reported by the first station. In addition to being the TID of the delay-sensitive service, the indicated TID has other definitions consistent with the ACI bitmap of the BSR control subfield (BSR control subfield) in IEEE 802.11ax. Details are not described herein again.

For example, in the third BSR control field, the service period-based field is used to indicate whether the preset urgency requirement or range is represented based on a service period, for example, for an r-TWT, whether the preset urgency requirement or range is represented based on an r-TWT service period. Specifically, the field may occupy 1 bit. When a value of the field is 0, it indicates that the preset urgency requirement or range is not represented based on the service period, and the scaling factor field and the delay expiration time difference bound field are used to represent the preset urgency requirement or range; or when a value of the field is 1, it indicates that the preset urgency requirement or range is represented based on the service period, and the second delay expiration indication bitmap field is used to represent the specific urgency requirement or range. Alternatively, when a value of the field is 1, it indicates that the preset urgency requirement or range is not represented based on the service period, and the scaling factor field and the delay expiration time difference bound field are used to represent the preset urgency requirement or range; or when a value of the field is 0, it indicates that the preset urgency requirement or range is represented based on the service period, and the second delay expiration indication bitmap field is used to represent the specific urgency requirement or range.

Specifically, for example, in the third BSR control field, the buffer traffic scaling factor field is in units of bytes, and indicates a unit corresponding to the buffer specific traffic size (Queue Size selected) field. A definition of the buffer traffic scaling factor field is consistent with that of the Scaling Factor of the BSR control subfield (BSR control subfield) in IEEE 802.11ax. Details are not described herein again.

It should be noted that a buffer status report (BSR) defined in IEEE 802.11 cannot provide information related to delay requirements and cannot provide timely information related to urgency of service data transmission for transmission of delay-sensitive services (or low-delay services). To address this problem, this application proposes a status reporting (Urgency-based BSR, U-BSR) mechanism for delay-sensitive service data in a buffer based on urgency of to-be-transmitted data. During an r-TWT service period or during scheduling of delay-sensitive service transmission by the second station, the second station may trigger the first station to report a status report of delay-sensitive service data in the buffer that is based on the urgency of the to-be-transmitted data, or the first station proactively reports the status report of the delay-sensitive service data in the buffer that is based on the urgency of the to-be-transmitted data.

The following describes technical solutions of this application in detail by using Embodiment 1 and Embodiment 2.

### Embodiment 1: Mechanism of status reporting of delay-sensitive service data in a buffer during an r-TWT SP, where a first station is a non-AP STA, a second station is an AP STA, and the non-AP STA is an r-TWT scheduled station

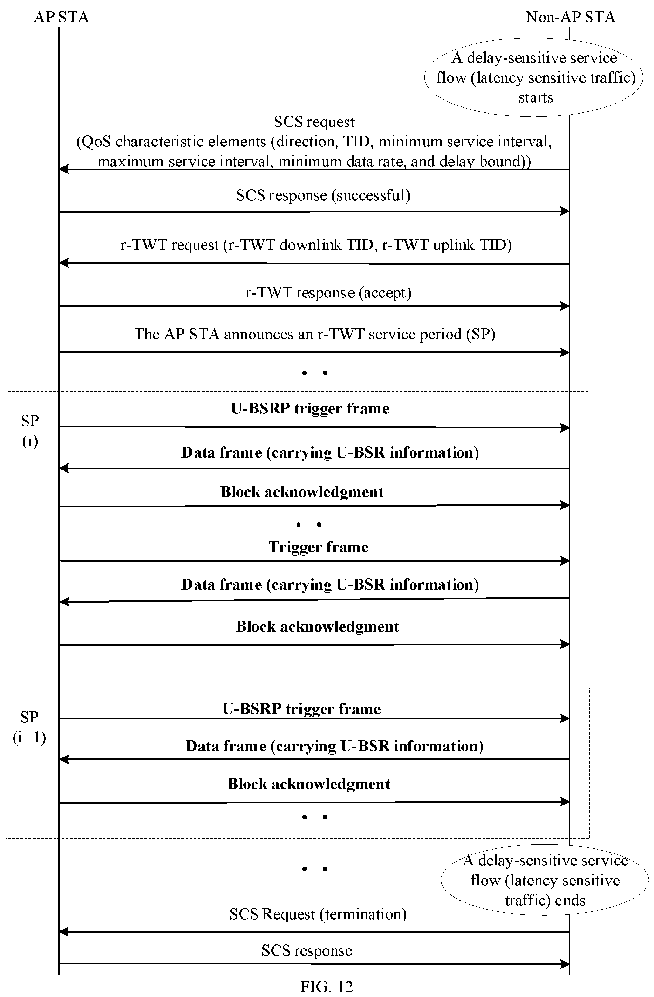

In Embodiment 1, as shown in FIG. 12, the non-AP STA sends an SCS request carrying a QoS characteristics element (QoS Characteristics element) to the AP STA. The QoS characteristics element includes recommended parameters for meeting transmission requirements of delay-sensitive services, including direction (Direction, for example, uplink), traffic identifier (TID), minimum service interval (Minimum Service Interval), maximum service interval (Maximum Service Interval), minimum data rate (Minimum Data Rate), and delay bound (Delay Bound). After the AP STA receives the SCS request, if the AP accepts the SCS request, it returns an SCS request acceptance response to the non-AP STA. Then, the AP STA and the non-AP STA establish r-TWT based on an SCS negotiation result, and determine an uplink or downlink traffic identifier (TID) of a delay-sensitive service transmitted in a predetermined service period (SP). The Non-AP STA transmits the delay-sensitive service during the predetermined service period announced by the AP STA. For example, the AP STA may specify, by sending a trigger frame, which r-TWT scheduled station performs uplink transmission, and allocate transmission resources to each scheduled station.

During the r-TWT service period, the AP STA may trigger an r-TWT scheduled station (non-AP STA) corresponding to the service period to report a status report of delay-sensitive service data in the buffer that is based on urgency of to-be-transmitted data, or the r-TWT scheduled station may proactively report a status report of delay-sensitive service data in the buffer that is based on urgency of to-be-transmitted data, as shown in FIG. 12.

In Embodiment 1, when the AP STA triggers the r-TWT scheduled station to report (requested U-BSR), the AP STA sends a BSR poll trigger frame (U-BSRP Trigger frame) carrying an urgency requirement, and the non-AP STA may add, according to the urgency requirement or range indicated in the U-BSRP Trigger frame, a new BSR control subfield variant or a U-BSR control subfield (U-BSR Control subfield) to any frame transmitted to the AP in response to the BSRP Trigger Frame, so as to transmit U-BSR information. For proactive reporting by the r-TWT scheduled station (unrequested U-BSR), the non-AP STA may transmit U-BSR information in a U-BSR Control subfield of any frame transmitted to the AP, where the U-BSR reflects a buffer status report that meets a specific urgency range. The U-BSR includes a status report of delay-sensitive service data in the buffer that meets the urgency requirement or range. The status report may alternatively be represented based on status report information of delay-sensitive service data in the buffer with transmission delay expiration at the corresponding moment of the service period, or based on status report information of delay-sensitive service data in the buffer that is based on a delay expiration time difference (TimetoDelayExpire) bound range.

### Embodiment 2: Mechanism of status reporting of delay-sensitive service data in a buffer based on AP-triggered scheduling scenario, where a first station is a non-AP STA, a second station is an AP STA, and the non-AP STA is an r-TWT scheduled station

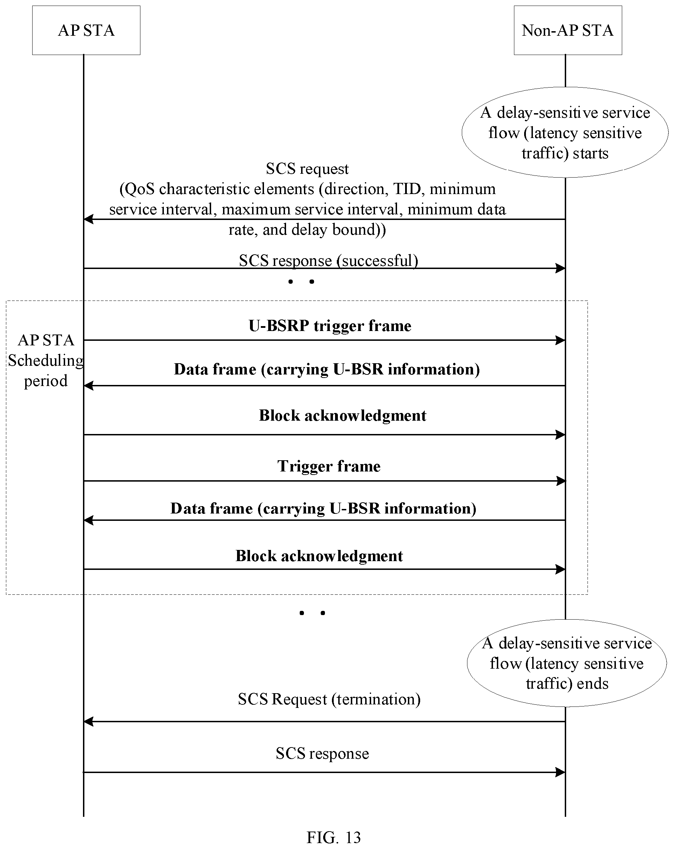

In Embodiment 2, as shown in FIG. 13, the non-AP STA sends an SCS request carrying a QoS characteristics element (QoS Characteristics element) to the AP STA. The QoS characteristics element includes recommended parameters for meeting transmission requirements of delay-sensitive services, including direction (Direction, for example, uplink), traffic identifier (TID), minimum service interval (Minimum Service Interval), maximum service interval (Maximum Service Interval), minimum data rate (Minimum Data Rate), and delay bound (Delay Bound). After the AP STA receives the SCS request, if the AP accepts the SCS request, it returns an SCS request acceptance response to the non-AP STA. Then, according to a delay-sensitive service transmission requirement in an established SCS stream, the AP STA schedules transmission of the delay-sensitive service data of the non-AP STA by using a trigger frame-based transmission manner.

During the scheduling of the transmission of the delay-sensitive service data by the AP STA, the AP STA may trigger the non-AP STA to report a status report of delay-sensitive service data in the buffer that is based on urgency of to-be-transmitted data, or the non-AP STA may proactively report a status report of delay-sensitive service data in the buffer that is based on urgency of to-be-transmitted data, as shown in FIG. 13.

In Embodiment 2, when the AP STA triggers the non-AP STA to report (requested U-BSR), the AP STA sends a trigger frame (U-BSRP Trigger frame) carrying an urgency requirement, and the non-AP STA may add, according to the urgency requirement or range indicated in the U-BSRP Trigger frame, a new BSR control subfield variant or a U-BSR control subfield (U-BSR Control subfield) to any frame transmitted to the AP STA in response to the BSRP Trigger Frame, so as to transmit U-BSR information. For proactive reporting by the non-AP STA (unrequested U-BSR), the non-AP STA may transmit U-BSR information in a U-BSR Control subfield of any frame transmitted to the AP STA, where the U-BSR reflects a buffer status report that meets a specific urgency range. The U-BSR includes a status report of delay-sensitive service data in the buffer that meets the urgency requirement or range. The status report may be represented based on status report information of delay-sensitive service data in the buffer that is based on a delay expiration time difference (TimetoDelayExpire) bound range, or may be represented based on status report information of delay-sensitive service data in the buffer that is based on transmission delay expiration at a corresponding moment of the scheduling period.

Therefore, in this embodiment of this application, a first station may send, through a first BSR to a second station, buffer status report information that is based on urgency of to-be-transmitted data, so that the second station may allocate a UL MU resource according to a transmission requirement that is reported by the first station and that is based on the urgency of to-be-transmitted data, thereby meeting a transmission requirement of a delay-sensitive service.

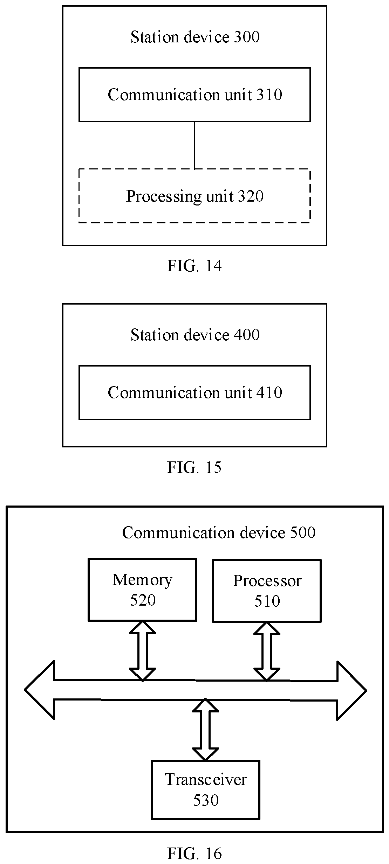

The foregoing describes method embodiments of this application in detail with reference to FIG. 4 to FIG. 13. The following describes apparatus embodiments of this application in detail with reference to FIG. 14 to FIG. 18. It should be understood that the apparatus embodiments are corresponding to the method embodiments. For similar descriptions, refer to the method embodiments.

FIG. 14 is a schematic block diagram of a station device 300 according to an embodiment of this application. The station device 300 is a first station. As shown in FIG. 14, the station device 300 includes:
a communication unit 310, configured to send a first buffer status report BSR to a second station;
where the first BSR includes at least first status report information, and the first status report information is buffer status report information based on urgency of to-be-transmitted data.

In some embodiments, the first status report information includes status report information of delay-sensitive service data in a buffer that meets a preset urgency requirement or range.

In some embodiments, the preset urgency requirement or range is represented based on status report information of delay-sensitive service data in a buffer with transmission delay expiration associated in a service period; or the preset urgency requirement or range is represented based on status report information of delay-sensitive service data in a buffer with transmission delay expiration associated in a scheduling period, where the scheduling period is used to schedule transmission of a delay-sensitive service.

In some embodiments, the first status report information specifically includes at least one of the following:
a data size of a delay-sensitive service whose transmission delay has expired in the buffer, or a data size of a delay-sensitive service whose transmission delay has not expired at a first moment and expires at a second moment in the buffer.

In some embodiments, the second moment is later than the first moment.

In some embodiments, the first moment is a current moment, and the second moment is one of the following: an end time point of a currently allocated service period, a start time point of a next allocated service period, and an end time of the next allocated service period; or
the first moment is an end time point of a currently allocated service period, and the second moment is one of the following: a start time point of a next allocated service period, and an end time point of the next allocated service period; or
the first moment is a start time point of a next allocated service period, and the second moment is an end time point of the next allocated service period.

In some embodiments, the first moment is a current moment, and the second moment is one of the following: an end time point of a current scheduling period, a start time point of a next scheduling period, and an end time point of the next scheduling period; or
the first moment is an end time point of a scheduling period for currently scheduling transmission of a delay-sensitive service by the second station, and the second moment is one of the following: a start time point of a next scheduling period, and an end time point of a next scheduling period; or
the first moment is a start time point of a next scheduling period, and the second moment is an end time point of the next scheduling period;
where the scheduling period is used to schedule transmission of the delay-sensitive service.

In some embodiments, the preset urgency requirement or range is where the based on status report information of delay-sensitive service data in a buffer with a delay expiration time difference bound range.

In some embodiments, the first status report information specifically includes a data size of a delay-sensitive service, whose delay expiration time difference is less than or equal to the delay expiration time difference bound, in a buffer.

In some embodiments, the delay expiration time difference bound is configured or indicated by the second station, or the delay expiration time difference bound is agreed upon by a protocol.

In some embodiments, data associated with the first status report information is data of a media access control service data unit MSDU or an aggregated media access control service data unit A-MSDU corresponding to a target traffic identifier TID of a target access category AC in the buffer; and/or data associated with the first status report information is data of an MSDU or A-MSDU corresponding to a target TID in the buffer;
where the target AC is an AC to which a TID of the delay-sensitive service belongs, and the target TID is a TID of the delay-sensitive service.

In some embodiments, the communication unit 310 is specifically configured to:
send the first BSR to the second station in a service period; or
send the first BSR to the second station outside a service period; or
send the first BSR to the second station in a scheduling period in which the second station schedules transmission of the delay-sensitive service; or
send the first BSR to the second station between two scheduling periods in which the second station schedules transmission of the delay-sensitive service.

In some embodiments, a restricted target wake time r-TWT protocol is established between the first station and the second station, the service period is an r-TWT service period, and the first station is an r-TWT scheduled station corresponding to the r-TWT service period.

In some embodiments, the communication unit 310 is specifically configured to:
send the first BSR to the second station after the first station establishes a stream classification service SCS stream by sending an SCS request carrying a quality of service QoS characteristics element;
where the QoS characteristics element includes a recommended parameter for meeting a transmission requirement of the delay-sensitive service.

In some embodiments, the recommended parameter for meeting the transmission requirement of the delay-sensitive services includes at least one of the following: a direction, a TID, a minimum service interval, a maximum service interval, a minimum data rate, or a delay bound.

In some embodiments, the communication unit 310 is specifically configured to:
proactively send the first BSR to the second station; or
send the first BSR to the second station based on triggering from the second station.

In some embodiments, in a case that the first station proactively sends the first BSR to the second station, the first station adds the first BSR to a BSR control subfield that is based on the urgency of the to-be-transmitted data and that is in any frame to be transmitted to the second station.

In some embodiments, in a case that the first station sends the first BSR to the second station based on the triggering from the second station, a trigger frame sent by the second station is a buffer status report poll trigger frame based on the urgency of the to-be-transmitted data.

In some embodiments, the first station adds, according to a preset urgency requirement or range indicated in the trigger frame, the first BSR to a new BSR control subfield variant of any frame to be transmitted to the second station in response to the trigger frame; or
the first station adds, according to a preset urgency requirement or range indicated in the trigger frame, the first BSR to a BSR control subfield that is based on the urgency of the to-be-transmitted data and that is in any frame to be transmitted to the second station in response to the trigger frame.

In some embodiments, the trigger frame includes at least one of the following: indication information for indicating the preset urgency requirement or range, indication information for indicating whether to trigger reporting of status report information of all delay-sensitive service data in the buffer, or indication information for indicating whether to represent the preset urgency requirement or range based on a service period.

In some embodiments, the trigger frame includes a trigger type field, where the trigger type field is used to indicate that the trigger frame is a buffer status report poll trigger frame based on the urgency of the to-be-transmitted data.

In some embodiments, the trigger frame includes a trigger dependent common information field;
the trigger dependent common information field includes at least one of the following: an all indication field, a service period-based field, a scaling factor field, or a delay expiration time difference bound field; or the trigger dependent common information field includes at least one of the following: an all indication field, a service period-based field, or a first delay expiration indication bitmap field; and
the all indication field is used to indicate whether to trigger status report information of all delay-sensitive service data in a buffer of the first station, the service period-based field is used to indicate whether to represent the preset urgency requirement or range based on the service period, the scaling factor field is used to indicate a unit of the delay expiration time difference bound field, the delay expiration
time difference bound field is used to indicate a preset urgency requirement or range needing to be met by buffer data corresponding to to-be-reported status report information, and the first delay expiration indication bitmap field is used to indicate the preset urgency requirement or range needing to be met by the buffer data corresponding to the to-be-reported status report information.

In some embodiments, the all indication field is set to a first value, indicating triggering of status report information, reported by the first station, of all delay-sensitive service data in the buffer; or the all indication field is set to a second value, indicating triggering of status report information, reported by the first station, of delay-sensitive service data in the buffer that meets the preset urgency requirement or range.

In some embodiments, the delay expiration time difference bound field indicates status report information reported by the first station and corresponding to delay-sensitive service data whose delay expiration time difference is less than or equal to the delay expiration time difference bound in the buffer.

In some embodiments, the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the first delay expiration indication bitmap field is set to a third value, indicating buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the first delay expiration indication bitmap field is set to a fourth value, indicating buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

In some embodiments, the first delay expiration indication bitmap field is set to a first value, indicating buffer traffic corresponding to a target TID or a target TID of a target AC whose transmission delay has expired at the current moment;
the first delay expiration indication bitmap field is set to the second value, indicating buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the first delay expiration indication bitmap field is set to the third value, indicating buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the first delay expiration indication bitmap field is set to the fourth value, indicating buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

In some embodiments, the service period-based field is set to a first value, indicating that the preset urgency requirement or range is not represented based on a service period, and the scaling factor field and the delay expiration time difference bound field are used to represent the preset urgency requirement or range; or the service period-based field is set to a second value, indicating that the preset urgency requirement or range is represented based on a service period, and the first delay expiration indication bitmap field is used to represent the preset urgency requirement or range.

In some embodiments, the first BSR is carried in a first BSR control field;
the first BSR control field includes at least one of the following: an access category index bitmap field, a delta traffic identifier field, a high priority access category index field, a first queue field, or a second queue field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the high priority access category index field is used to indicate an AC to which a TID of a delay-sensitive service corresponding to a BSR indicated by the first queue field belongs, the first queue field is used to indicate a buffer traffic size that is to be sent to a target device and meets the preset urgency requirement or range and that corresponds to a TID of a delay-sensitive service in an AC indicated by the high priority access category field, and the second queue field is used to indicate a buffer traffic size that is to be sent to the target device and meets the preset urgency requirement or range and that corresponds to TIDs of delay-sensitive services in all ACs indicated by the access category index bitmap field; and
the target device is identified by a receiver address of a frame including the first BSR control field, and the preset urgency requirement or range is indicated by the trigger frame sent by the second station.

In some embodiments, the first BSR control field is a new BSR control subfield variant.

In some embodiments, the station device 300 further includes a processing unit 320.

The processing unit 320 is configured to determine to use the new BSR control subfield variant to report the first BSR in a case that the first station receives the trigger frame sent by the second station and the trigger frame instructs the first station to report a buffer status report that is based on the urgency of the to-be-transmitted data.

In some embodiments, the first BSR is carried in a second BSR control field;
the second BSR control field includes at least one of the following: an access category index bitmap field, a delta traffic identifier field, a service period-based field, a second delay expiration indication bitmap field, a scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the second delay expiration indication bitmap field is used to indicate target buffer traffic associated with TIDs of delay-sensitive services in all ACs indicated by the buffer specific traffic size field, the scaling factor field is used to indicate a unit corresponding to the buffer specific traffic size field, and the buffer specific traffic size field is used to indicate a buffer traffic size that is to be sent to a target device and meets the preset urgency requirement or range and that corresponds to the TIDs of the delay-sensitive services in all the ACs indicated by the access category index bitmap field; and
the target device is identified by a receiver address of a frame including the second BSR control field, and the preset urgency requirement or range is indicated by the second delay expiration indication bitmap field.

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

In some embodiments, the second BSR control field is a BSR control subfield based on urgency of to-be-transmitted data.

In some embodiments, the first BSR is carried in a third BSR control field;
the third BSR control field includes at least one of the following: an access category index bitmap field, a delta traffic identifier field, a service period-based field, a delay expiration time difference bound field, a delay scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the delay scaling factor field is used to indicate a unit corresponding to the delay expiration time difference bound field, and the delay expiration time difference bound field is used to indicate a preset urgency requirement or range needing to be met by buffer data corresponding to to-be-reported status report information, the buffer traffic scaling factor field is used to indicate a unit corresponding to the buffer specific traffic size field, and the buffer specific traffic size field is used to indicate a buffer traffic size that is to be sent to a target device and meets the preset urgency requirement or range and that corresponds to TIDs of delay-sensitive services in all ACs indicated by the access category index bitmap field; and
the target device is identified by a receiver address of a frame including the third BSR control field, and the preset urgency requirement or range is indicated by the delay expiration time difference bound field.

In some embodiments, the delay expiration time difference bound field indicates status report information reported by the first station and corresponding to delay-sensitive service data whose delay expiration time difference is less than or equal to the delay expiration time difference bound in the buffer.

In some embodiments, the third BSR control field is a BSR control subfield based on urgency of to-be-transmitted data.

In some embodiments, the service period is a restricted target wake time r-TWT service period, and the first station is an r-TWT scheduled station.

In some embodiments, the delay expiration time difference is a time difference of the delay-sensitive service data between the current moment and a transmission delay expiration time point of the delay-sensitive service data; or the delay expiration time difference is a time difference of the delay-sensitive service data between a target moment and a transmission delay expiration time point of the delay-sensitive service data.

In some embodiments, the transmission delay expiration time point is a time point when duration of a delay bound elapses after a time point at which an MSDU or A-MSDU belonging to a delay-sensitive service flow arrives at a MAC sublayer from a local media access control MAC service access point; and
the delay bound is maximum duration allowed for transmitting the MSDU or A-MSDU.

In some embodiments, that the transmission delay has expired means that a delay expiration time difference of a to-be-transmitted MSDU or A-MSDU relative to the current moment is less than or equal to zero, or that the transmission delay has expired means that a delay expiration time difference of a to-be-transmitted MSDU or A-MSDU relative to the current moment is less than a delay expiration deviation threshold; and/or
the transmission delay expiration means that a delay expiration time difference of a to-be-transmitted MSDU or A-MSDU relative to a target moment is less than or equal to zero, or the transmission delay expiration means that a delay expiration time difference of a to-be-transmitted MSDU or A-MSDU relative to a target moment is less than a delay expiration deviation threshold; and/or
that the transmission delay has not expired means that a delay expiration time difference of a to-be-transmitted MSDU or A-MSDU relative to a target moment is greater than zero, or that the transmission delay has not expired means that a delay expiration time difference of a to-be-transmitted MSDU or A-MSDU relative to the target moment is greater than or equal to a delay expiration deviation threshold.

In some embodiments, the delay expiration deviation threshold is a time interval between a start point of transmission and a time point of confirmed successful transmission of the MSDU or A-MSDU.

In some embodiments, the first station is a non-access point station non-AP STA, and the second station is an access point station AP STA.

In some embodiments, the first station is a non-AP STA, and the second station is another non-AP STA; or
the first station is an AP STA, and the second station is another AP STA.

In some embodiments, the foregoing communication unit may be a communication interface or a transceiver, or an input/output interface of a communication chip or a system on chip. The processing unit may be one or more processors.

It should be understood that the station device 300 according to embodiments of this application may correspond to the first station in the method embodiments of this application, and the foregoing and other operations and/or functions of units in the station device 300 are separately used to implement corresponding processes of the first station in the method 200 shown in FIG. 4. For brevity, details are not described herein again.

FIG. 15 is a schematic block diagram of a station device 400 according to an embodiment of this application. The station device 400 is a second station. As shown in FIG. 15, the station device 400 includes:
a communication unit 410, configured to receive a first buffer status report BSR sent by a first station;
where the first BSR includes at least first status report information, and the first status report information is buffer status report information based on urgency of to-be-transmitted data.

In some embodiments, the first status report information includes status report information of delay-sensitive service data in a buffer that meets a preset urgency requirement or range.

In some embodiments, the preset urgency requirement or range is represented based on status report information of delay-sensitive service data in a buffer with transmission delay expiration associated in a service period; or the preset urgency requirement or range is represented based on status report information of delay-sensitive service data in a buffer with transmission delay expiration associated in a scheduling period, where the scheduling period is used to schedule transmission of a delay-sensitive service.

In some embodiments, the first status report information specifically includes at least one of the following:
a data size of a delay-sensitive service whose transmission delay has expired in the buffer, or a data size of a delay-sensitive service whose transmission delay has not expired at a first moment and expires at a second moment in the buffer.

In some embodiments, the second moment is later than the first moment.

In some embodiments, the first moment is a current moment, and the second moment is one of the following: an end time point of a currently allocated service period, a start time point of a next allocated service period, and an end time of the next allocated service period; or
the first moment is an end time point of a currently allocated service period, and the second moment is one of the following: a start time point of a next allocated service period, and an end time point of the next allocated service period; or
the first moment is a start time point of a next allocated service period, and the second moment is an end time point of the next allocated service period.

In some embodiments, the first moment is a current moment, and the second moment is one of the following: an end time point of a current scheduling period, a start time point of a next scheduling period, and an end time point of the next scheduling period; or
the first moment is an end time point of a current scheduling period, and the second moment is one of the following: a start time point of a next scheduling period, and an end time point of a next scheduling period; or
the first moment is a start time point of a next scheduling period, and the second moment is an end time point of the next scheduling period;
where the scheduling period is used to schedule transmission of the delay-sensitive service.

In some embodiments, the preset urgency requirement or range is where the based on status report information of delay-sensitive service data in a buffer with a delay expiration time difference bound range.

In some embodiments, the first status report information specifically includes a data size of a delay-sensitive service, whose delay expiration time difference is less than or equal to the delay expiration time difference bound, in a buffer.

In some embodiments, the delay expiration time difference bound is configured or indicated by the second station, or the delay expiration time difference bound is agreed upon by a protocol.

In some embodiments, data associated with the first status report information is data of a media access control service data unit MSDU or an aggregated media access control service data unit A-MSDU corresponding to a target traffic identifier TID of a target access category AC in the buffer; and/or data associated with the first status report information is data of an MSDU or A-MSDU corresponding to a target TID in the buffer;
where the target AC is an AC to which a TID of the delay-sensitive service belongs, and the target TID is a TID of the delay-sensitive service.

In some embodiments, the communication unit 410 is specifically configured to:
receive the first BSR sent by the first station in a service period; or
receive the first BSR sent by the first station outside a service period; or
receive the first BSR sent by the first station in a scheduling period in which the second station schedules transmission of the delay-sensitive service; or
receive the first BSR sent by the first station between two scheduling periods in which the second station schedules transmission of the delay-sensitive service.

In some embodiments, a restricted target wake time r-TWT protocol is established between the first station and the second station, the service period is an r-TWT service period, and the first station is an r-TWT scheduled station corresponding to the r-TWT service period.

In some embodiments, the communication unit 410 is specifically configured to:
receive the first BSR sent by the first station after the first station establishes a stream classification service SCS stream by sending an SCS request carrying a quality of service QoS characteristics element;
where the QoS characteristics element includes a recommended parameter for meeting a transmission requirement of the delay-sensitive service.

In some embodiments, the recommended parameter for meeting the transmission requirement of the delay-sensitive services includes at least one of the following: a direction, a TID, a minimum service interval, a maximum service interval, a minimum data rate, or a delay bound

In some embodiments, the communication unit 410 is specifically configured to:
receive the first BSR proactively sent by the first station; or
receive the first BSR sent by the first station based on triggering from the second station.

In some embodiments, in a case that the first station proactively sends the first BSR to the second station, the first station adds the first BSR to a BSR control subfield that is based on the urgency of the to-be-transmitted data and that is in any frame to be transmitted to the second station.

In some embodiments, in a case that the first station sends the first BSR to the second station based on the triggering from the second station, a trigger frame sent by the second station is a buffer status report poll trigger frame based on the urgency of the to-be-transmitted data.

In some embodiments, the first station adds, according to a preset urgency requirement or range indicated in the trigger frame, the first BSR to a new BSR control subfield variant of any frame to be transmitted to the second station in response to the trigger frame; or
the first station adds, according to a preset urgency requirement or range indicated in the trigger frame, the first BSR to a BSR control subfield that is based on the urgency of the to-be-transmitted data and that is in any frame to be transmitted to the second station in response to the trigger frame.

In some embodiments, the trigger frame includes at least one of the following: indication information for indicating the preset urgency requirement or range, indication information for indicating whether to trigger reporting of status report information of all delay-sensitive service data in the buffer, or indication information for indicating whether to represent the preset urgency requirement or range based on a service period.

In some embodiments, the trigger frame includes a trigger type field, where the trigger type field is used to indicate that the trigger frame is a buffer status report poll trigger frame based on the urgency of the to-be-transmitted data.

In some embodiments, the trigger frame includes a trigger dependent common information field;
the trigger dependent common information field includes at least one of the following: an all indication field, a service period-based field, a scaling factor field, or a delay expiration time difference bound field; or the trigger dependent common information field includes at least one of the following: an all indication field, a service period-based field, or a first delay expiration indication bitmap field; and
the all indication field is used to indicate whether to trigger status report information of all delay-sensitive service data in a buffer of the first station, the service period-based field is used to indicate whether to represent the preset urgency requirement or range based on the service period, the scaling factor field is used to indicate a unit of the delay expiration time difference bound field, the delay expiration time difference bound field is used to indicate a preset urgency requirement or range needing to be met by buffer data corresponding to to-be-reported status report information, and the first delay expiration indication bitmap field is used to indicate the preset urgency requirement or range needing to be met by the buffer data corresponding to the to-be-reported status report information.

In some embodiments, the all indication field is set to a first value, indicating triggering of status report information, reported by the first station, of all delay-sensitive service data in the buffer; or the all indication field is set to a second value, indicating triggering of status report information, reported by the first station, of delay-sensitive service data in the buffer that meets the preset urgency requirement or range.

In some embodiments, the delay expiration time difference bound field indicates status report information reported by the first station and corresponding to delay-sensitive service data whose delay expiration time difference is less than or equal to the delay expiration time difference bound in the buffer.

In some embodiments, the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the first delay expiration indication bitmap field is set to a third value, indicating buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the first delay expiration indication bitmap field is set to a fourth value, indicating buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

In some embodiments, the first delay expiration indication bitmap field is set to a first value, indicating buffer traffic corresponding to a target TID or a target TID of a target AC whose transmission delay has expired at the current moment;
the first delay expiration indication bitmap field is set to the second value, indicating buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the first delay expiration indication bitmap field is set to the third value, indicating buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the first delay expiration indication bitmap field is set to the fourth value, indicating buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

In some embodiments, the service period-based field is set to a first value, indicating that the preset urgency requirement or range is not represented based on a service period, and the scaling factor field and the delay expiration time difference bound field are used to represent the preset urgency requirement or range; or
the service period-based field is set to a second value, indicating that the preset urgency requirement or range is represented based on a service period, and the first delay expiration indication bitmap field is used to represent the preset urgency requirement or range.

In some embodiments, the first BSR is carried in a first BSR control field;
where the first BSR control field includes at least one of the following: an access category index bitmap field, a delta traffic identifier field, a high priority access category index field, a first queue field, or a second queue field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the high priority access category index field is used to indicate an AC to which a TID of a delay-sensitive service corresponding to a BSR indicated by the first queue field belongs, the first queue field is used to indicate a buffer traffic size that is to be sent to a target device and meets the preset urgency requirement or range and that corresponds to a TID of a delay-sensitive service in an AC indicated by the high priority access category field, and the second queue field is used to indicate a buffer traffic size that is to be sent to the target device and meets the preset urgency requirement or range and that corresponds to TIDs of delay-sensitive services in all ACs indicated by the access category index bitmap field; and
the target device is identified by a receiver address of a frame including the first BSR control field, and the preset urgency requirement or range is indicated by the trigger frame sent by the second station.

In some embodiments, the first BSR control field is a new BSR control subfield variant.

In some embodiments, the first station uses the new BSR control subfield variant to report the first BSR in a case that the first station receives the trigger frame sent by the second station and the trigger frame instructs the first station to report a buffer status report that is based on the urgency of the to-be-transmitted data.

In some embodiments, the first BSR is carried in a second BSR control field;
the second BSR control field includes at least one of the following: an access category index bitmap field, a delta traffic identifier field, a service period-based field, a second delay expiration indication bitmap field, a scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the second delay expiration indication bitmap field is used to indicate target buffer traffic associated with TIDs of delay-sensitive services in all ACs indicated by the buffer specific traffic size field, the scaling factor field is used to indicate a unit corresponding to the buffer specific traffic size field, and the buffer specific traffic size field is used to indicate a buffer traffic size that is to be sent to a target device and meets the preset urgency requirement or range and that corresponds to the TIDs of the delay-sensitive services in all the ACs indicated by the access category index bitmap field; and
the target device is identified by a receiver address of a frame including the second BSR control field, and the preset urgency requirement or range is indicated by the second delay expiration indication bitmap field.

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the currently allocated service period, the start time point of the next allocated service period, and the end time point of the next allocated service period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently allocated service period, and the second moment is one of the following: the start time point of the next allocated service period, and the end time point of the next allocated service period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next allocated service period, and the second moment is the end time point of the next allocated service period;
where the target AC is an AC to which a TID of the delay-sensitive service belongs, and the target TID is a TID of the delay-sensitive service.

In some embodiments, the second delay expiration indication bitmap field is set to a first value, indicating that the target buffer traffic is buffer traffic corresponding to all target TIDs or target TIDs of all target AC;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, where the first moment is the current moment, and the second moment is one of the following: the end time point of the current scheduling period, the start time point of the next scheduling period, and the end time point of the next scheduling period;
the second delay expiration indication bitmap field is set to a fourth value, indicating that the target buffer traffic is buffer traffic corresponding to a target TID or a target TID of a target AC whose transmission delay has not expired at a first moment and expires at a second moment, where the first moment is the end time point of the currently scheduling period, and the second moment is one of the following: the start time point of the next scheduling period, and the end time point of the next scheduling period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, where the first moment is the start time point of the next scheduling period, and the second moment is the end time point of the next scheduling period;
where the target AC is an AC to which a TID of the delay-sensitive service belongs, the target TID is a TID of the delay-sensitive service, and the scheduling period is used to schedule transmission of the delay-sensitive service.

In some embodiments, the second BSR control field is a BSR control subfield based on urgency of to-be-transmitted data.

In some embodiments, the first BSR is carried in a third BSR control field;
the third BSR control field includes at least one of the following: an access category index bitmap field, a delta traffic identifier field, a service period-based field, a delay expiration time difference bound field, a delay scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the delay scaling factor field is used to indicate a unit corresponding to the delay expiration time difference bound field, and the delay expiration time difference bound field is used to indicate a preset urgency requirement or range needing to be met by buffer data corresponding to to-be-reported status report information, the buffer traffic scaling factor field is used to indicate a unit corresponding to the buffer specific traffic size field, and the buffer specific traffic size field is used to indicate a buffer traffic size that is to be sent to a target device and meets the preset urgency requirement or range and that corresponds to TIDs of delay-sensitive services in all ACs indicated by the access category index bitmap field; and
the target device is identified by a receiver address of a frame including the third BSR control field, and the preset urgency requirement or range is indicated by the delay expiration time difference bound field.

In some embodiments, the delay expiration time difference bound field indicates status report information reported by the first station and corresponding to delay-sensitive service data whose delay expiration time difference is less than or equal to the delay expiration time difference bound in the buffer.

In some embodiments, the third BSR control field is a BSR control subfield based on urgency of to-be-transmitted data.

In some embodiments, the service period is a restricted target wake time r-TWT service period, and the first station is an r-TWT scheduled station.

In some embodiments, the delay expiration time difference is a time difference of the delay-sensitive service data between the current moment and a transmission delay expiration time point of the delay-sensitive service data; or the delay expiration time difference is a time difference of the delay-sensitive service data between a target moment and a transmission delay expiration time point of the delay-sensitive service data.

In some embodiments, the transmission delay expiration time point is a time point when duration of a delay bound elapses after a time point at which an MSDU or A-MSDU belonging to a delay-sensitive service flow arrives at a MAC sublayer from a local media access control MAC service access point; and
the delay bound is maximum duration allowed for transmitting the MSDU or A-MSDU.

In some embodiments, that the transmission delay has expired means that a delay expiration time difference of a to-be-transmitted MSDU or A-MSDU relative to the current moment is less than or equal to zero, or that the transmission delay has expired means that a delay expiration time difference of a to-be-transmitted MSDU or A-MSDU relative to the current moment is less than a delay expiration deviation threshold; and/or
the transmission delay expiration means that a delay expiration time difference of a to-be-transmitted MSDU or A-MSDU relative to a target moment is less than or equal to zero, or the transmission delay expiration means that a delay expiration time difference of a to-be-transmitted MSDU or A-MSDU relative to a target moment is less than a delay expiration deviation threshold; and/or
that the transmission delay has not expired means that a delay expiration time difference of a to-be-transmitted MSDU or A-MSDU relative to a target moment is greater than zero, or that the transmission delay has not expired means that a delay expiration time difference of a to-be-transmitted MSDU or A-MSDU relative to the target moment is greater than or equal to a delay expiration deviation threshold.

In some embodiments, the delay expiration deviation threshold is a time interval between a start point of transmission and a time point of confirmed successful transmission of the MSDU or A-MSDU.

In some embodiments, the first station is a non-access point station non-AP STA, and the second station is an access point station AP STA.

In some embodiments, the first station is a non-AP STA, and the second station is another non-AP STA; or
the first station is an AP STA, and the second station is another AP STA.

In some embodiments, the foregoing communication unit may be a communication interface or a transceiver, or an input/output interface of a communication chip or a system on chip.

It should be understood that the station device 400 according to embodiments of this application may correspond to the second station in the method embodiments of this application, and the foregoing and other operations and/or functions of units in the station device 400 are separately used to implement corresponding processes of the second station in the method 200 shown in FIG. 4. For brevity, details are not described herein again.

FIG. 16 is a schematic diagram of a structure of a communication device 500 according to an embodiment of this application. The communication device 500 shown in FIG. 16 includes a processor 510, and the processor 510 may invoke a computer program from a memory and run the computer program to implement a method in embodiments of this application.

In some embodiments, as shown in FIG. 16, the communication device 500 may further include a memory 520. The processor 510 may invoke and run a computer program from the memory 520 to implement the method in embodiments of this application.

The memory 520 may be a separate component independent of the processor 510, or may be integrated into the processor 510.

In some embodiments, as shown in FIG. 16, the communication device 500 may further include a transceiver 530. The processor 510 may control the transceiver 530 to communicate with another device. Specifically, the processor 510 may transmit information or data to the another device, or receive information or data transmitted by the another device.

The transceiver 530 may include a transmitting set and a receiving set. The transceiver 530 may further include an antenna, and a quantity of antennas may be one or more.

In some embodiments, the communication device 500 may be specifically the station device in embodiments of this application, and the communication device 500 may implement corresponding processes implemented by the first station in methods in embodiments of this application. For brevity, details are not described herein again.

In some embodiments, the communication device 500 may be specifically the station device in embodiments of this application, and the communication device 500 may implement corresponding processes implemented by the second station in methods in embodiments of this application. For brevity, details are not described herein again.

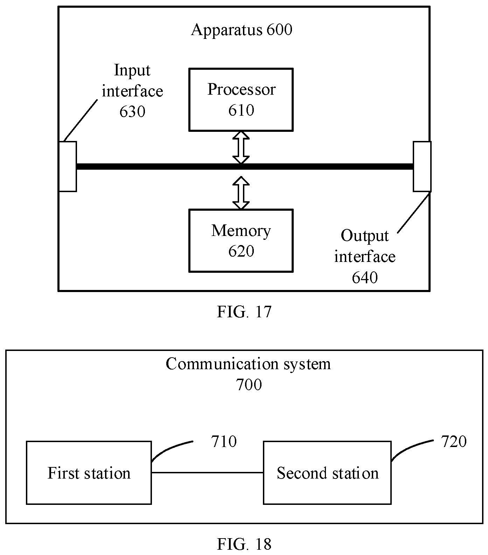

FIG. 17 is a schematic diagram of a structure of an apparatus according to an embodiment of this application. The apparatus 600 shown in FIG. 17 includes a processor 610, and the processor 610 may invoke a computer program from a memory and run the computer program to implement a method in embodiments of this application.

In some embodiments, as shown in FIG. 17, the apparatus 600 may further include a memory 620. The processor 610 may invoke and run a computer program from the memory 620 to implement the method in embodiments of this application.

The memory 620 may be a separate component independent of the processor 610, or may be integrated into the processor 610.

In some embodiments, the apparatus 600 may further include an input interface 630. The processor 610 may control the input interface 630 to communicate with another device or chip, and specifically, may obtain information or data transmitted by the another device or chip.

In some embodiments, the apparatus 600 may further include an output interface 640. The processor 610 may control the output interface 640 to communicate with another device or chip, and specifically, may output information or data to the another device or chip.

In some embodiments, the apparatus may be applied to the station device in embodiments of this application, and the apparatus may implement the corresponding processes implemented by the first station in various methods in embodiments of this application. For brevity, details are not described herein again.

In some embodiments, the apparatus may be applied to the station device in embodiments of this application, and the apparatus may implement the corresponding processes implemented by the second station in various methods in embodiments of this application. For brevity, details are not described herein again.

In some embodiments, the apparatus mentioned in embodiments of this application may alternatively be a chip, for example, may be a system-level chip, a system chip, a chip system, or a system-on-chip, or the like.

FIG. 18 is a schematic block diagram of a communication system 700 according to an embodiment of this application. As shown in FIG. 18, the communication system 700 includes a first station 710 and a second station 720.

The first station 710 may be configured to implement corresponding functions implemented by the first station in the foregoing method, and the second station 720 may be configured to implement corresponding functions implemented by the second station in the foregoing method. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct Rambus random access memory (Direct Rambus RAM, DR RAM), or the like. In other words, the memory in this embodiment of this application includes but is not limited to these memories and any memory of another proper type.

An embodiment of this application further provides a computer-readable storage medium, configured to store a computer program.

In some embodiments, the computer-readable storage medium may be applied to the station device in embodiments of this application, and the computer program causes a computer to perform corresponding processes implemented by the first station in methods in embodiments of this application. For brevity, details are not described herein again.

In some embodiments, the computer-readable storage medium may be applied to the station device in embodiments of this application, and the computer program causes a computer to perform corresponding processes implemented by the second station in methods in embodiments of this application. For brevity, details are not described herein again.

An embodiment of this application further provides a computer program product, including computer program instructions.

In some embodiments, the computer program product may be applied to the station device in embodiments of this application, and the computer program instructions cause a computer to perform corresponding processes implemented by the first station in methods in embodiments of this application. For brevity, details are not described herein again.

In some embodiments, the computer program product may be applied to the station device in embodiments of this application, and the computer program instructions cause a computer to perform corresponding processes implemented by the second station in methods in embodiments of this application. For brevity, details are not described herein again.

An embodiment of this application further provides a computer program.

In some embodiments, the computer program may be applied to the station device in embodiments of this application. When the computer program is run on a computer, the computer perform corresponding processes implemented by the first station in methods in embodiments of this application. For brevity, details are not described herein again.

In some embodiments, the computer program may be applied to the station device in embodiments of this application. When the computer program is run on a computer, the computer perform corresponding processes implemented by the second station in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

Those skilled in the art may clearly understand that, for the purpose of convenient and brief description, for detailed working processes of the foregoing system, apparatus, and unit, reference may be made to the corresponding processes in the foregoing method embodiments, and details are not described herein again.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the essence of the technical solutions of this application or the part contributing to the prior art, or some of the technical solutions may be represented in the form of software products. The computer software products are stored in a storage medium, and include a number of instructions to enable a computer device (which may be a personal computer, a server, a network device, or the like) to perform all or some of the steps of the methods described in various embodiments of this application. The foregoing storage medium includes various media that may store a program code, such as a USB flash drive, a mobile hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, comprising:
sending, by a first station, a first buffer status report BSR to a second station;
wherein the first BSR comprises at least first status report information, and the first status report information is buffer status report information based on urgency of to-be-transmitted data.

2. The method according to claim 1, wherein the first status report information comprises status report information of delay-sensitive service data in a buffer that meets a preset urgency requirement or range.

3. The method according to claim 2, wherein
the preset urgency requirement or range is represented based on status report information of delay-sensitive service data in a buffer with transmission delay expiration associated in a service period; or
the preset urgency requirement or range is represented based on status report information of delay-sensitive service data in a buffer with transmission delay expiration associated in a scheduling period, wherein the scheduling period is used to schedule transmission of a delay-sensitive service.

4. The method according to claim 3, wherein the first status report information specifically comprises at least one of following:
a data size of a delay-sensitive service whose transmission delay has expired in the buffer, or a data size of a delay-sensitive service whose transmission delay has not expired at a first moment and expires at a second moment in the buffer.

5. The method according to claim 4, wherein the second moment is later than the first moment.

6. The method according to claim 5, wherein
the first moment is a current moment, and the second moment is one of following: an end time point of a currently allocated service period, a start time point of a next allocated service period, and an end time of the next allocated service period; or
the first moment is an end time point of a currently allocated service period, and the second moment is one of following: a start time point of a next allocated service period, and an end time point of the next allocated service period; or
the first moment is a start time point of a next allocated service period, and the second moment is an end time point of the next allocated service period.

7. The method according to claim 5, wherein
the first moment is a current moment, and the second moment is one of following: an end time point of a current scheduling period, a start time point of a next scheduling period, and an end time point of the next scheduling period; or
the first moment is an end time point of a current scheduling period, and the second moment is one of following: a start time point of a next scheduling period, and an end time point of a next scheduling period; or
the first moment is a start time point of a next scheduling period, and the second moment is an end time point of the next scheduling period;
wherein the scheduling period is used to schedule transmission of the delay-sensitive service.

8. The method according to claim 2, wherein the preset urgency requirement or range is represented based on status report information of delay-sensitive service data in a buffer with a delay expiration time difference bound range.

9. The method according to claim 8, wherein the first status report information specifically comprises a data size of a delay-sensitive service, whose delay expiration time difference is less than or equal to the delay expiration time difference bound, in a buffer.

10. The method according to claim 8 or 9, wherein
the delay expiration time difference bound is configured or indicated by the second station, or the delay expiration time difference bound is agreed upon by a protocol.

11. The method according to any one of claims 1 to 10, wherein
data associated with the first status report information is data of a media access control service data unit MSDU or an aggregated media access control service data unit A-MSDU corresponding to a target traffic identifier TID of a target access category AC in the buffer; and/or data associated with the first status report information is data of an MSDU or A-MSDU corresponding to a target TID in the buffer;
wherein the target AC is an AC to which a TID of the delay-sensitive service belongs, and the target TID is a TID of the delay-sensitive service.

12. The method according to any one of claims 1 to 11, wherein
the sending, by a first station, a first BSR to a second station comprises:
sending, by the first station, the first BSR to the second station in a service period; or,
sending, by the first station, the first BSR to the second station outside a service period; or
sending, by the first station, the first BSR to the second station in a scheduling period in which the second station schedules transmission of the delay-sensitive service; or
sending, by the first station, the first BSR to the second station between two scheduling periods in which the second station schedules transmission of the delay-sensitive service.

13. The method according to claim 12, wherein a restricted target wake time r-TWT protocol is established between the first station and the second station, the service period is an r-TWT service period, and the first station is an r-TWT scheduled station corresponding to the r-TWT service period.

14. The method according to any one of claims 1 to 13, wherein
the sending, by a first station, a first BSR to a second station comprises:
sending, by the first station, the first BSR to the second station after the first station establishes a stream classification service SCS stream by sending an SCS request carrying a quality of service QoS characteristics element;
wherein the QoS characteristics element comprises a recommended parameter for meeting a transmission requirement of the delay-sensitive service.

15. The method according to claim 14, wherein the recommended parameter for meeting the transmission requirement of the delay-sensitive services comprises at least one of following: a direction, a TID, a minimum service interval, a maximum service interval, a minimum data rate, or a delay bound.

16. The method according to any one of claims 1 to 15, wherein
the sending, by a first station, a first BSR to a second station comprises:
proactively sending, by the first station, the first BSR to the second station; or
sending, by the first station, the first BSR to the second station based on triggering from the second station.

17. The method according to claim 16, wherein
in a case that the first station proactively sends the first BSR to the second station, the first station adds the first BSR to a BSR control subfield that is based on the urgency of the to-be-transmitted data and that is in any frame to be transmitted to the second station.

18. The method according to claim 16, wherein
in a case that the first station sends the first BSR to the second station based on the triggering from the second station, a trigger frame sent by the second station is a buffer status report poll trigger frame based on the urgency of the to-be-transmitted data.

19. The method according to claim 18, wherein
the first station adds, according to a preset urgency requirement or range indicated in the trigger frame, the first BSR to a new BSR control subfield variant of any frame to be transmitted to the second station in response to the trigger frame; or
the first station adds, according to a preset urgency requirement or range indicated in the trigger frame, the first BSR to a BSR control subfield that is based on the urgency of the to-be-transmitted data and that is in any frame to be transmitted to the second station in response to the trigger frame.

20. The method according to claim 18 or 19, wherein
the trigger frame comprises at least one of following: indication information for indicating the preset urgency requirement or range, indication information for indicating whether to trigger reporting of status report information of all delay-sensitive service data in the buffer, or indication information for indicating whether to represent the preset urgency requirement or range based on a service period.

21. The method according to any one of claims 18 to 20, wherein
the trigger frame comprises a trigger type field, wherein the trigger type field is used to indicate that the trigger frame is a buffer status report poll trigger frame based on the urgency of the to-be-transmitted data.

22. The method according to any one of claims 18 to 21, wherein
the trigger frame comprises a trigger dependent common information field;
the trigger dependent common information field comprises at least one of following: an all indication field, a service period-based field, a scaling factor field, or a delay expiration time difference bound field; or the trigger dependent common information field comprises at least one of following: an all indication field, a service period-based field, or a first delay expiration indication bitmap field; and
the all indication field is used to indicate whether to trigger status report information of all delay-sensitive service data in a buffer of the first station, the service period-based field is used to indicate whether to represent the preset urgency requirement or range based on the service period, the scaling factor field is used to indicate a unit of the delay expiration time difference bound field, the delay expiration time difference bound field is used to indicate a preset urgency requirement or range needing to be met by buffer data corresponding to to-be-reported status report information, and the first delay expiration indication bitmap field is used to indicate the preset urgency requirement or range needing to be met by the buffer data corresponding to the to-be-reported status report information.

23. The method according to claim 22, wherein
the all indication field is set to a first value, indicating triggering of status report information, reported by the first station, of all delay-sensitive service data in the buffer; or the all indication field is set to a second value, indicating triggering of status report information, reported by the first station, of delay-sensitive service data in the buffer that meets the preset urgency requirement or range.

24. The method according to claim 22 or 23, wherein
the delay expiration time difference bound field indicates status report information reported by the first station and corresponding to delay-sensitive service data whose delay expiration time difference is less than or equal to the delay expiration time difference bound in the buffer.

25. The method according to claim 22 or 23, wherein
the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, wherein the first moment is the current moment, and the second moment is one of following: the end time point of the currently allocated service period, the start time point of the next allocated service period, and the end time point of the next allocated service period;
the first delay expiration indication bitmap field is set to a third value, indicating buffer traffic corresponding to a target TID or a target TID of a target AC whose transmission delay has not expired at a first moment and expires at a second moment, wherein the first moment is the end time point of the currently allocated service period, and the second moment is one of following: the start time point of the next allocated service period, and the end time point of the next allocated service period; or
the first delay expiration indication bitmap field is set to a fourth value, indicating buffer traffic corresponding to a target TID or a target TID of a target AC whose transmission delay has not expired at a first moment and expires at a second moment, wherein the first moment is the start time point of the next allocated service period, and the second moment is the end time point of the next allocated service period;
wherein the target AC is an AC to which a TID of the delay-sensitive service belongs, and the target TID is a TID of the delay-sensitive service.

26. The method according to claim 22 or 23, wherein
the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, wherein the first moment is the current moment, and the second moment is one of following: the end time point of the current scheduling period, the start time point of the next scheduling period, and the end time point of the next scheduling period;
the first delay expiration indication bitmap field is set to a third value, indicating buffer traffic corresponding to a target TID or a target TID of a target AC whose transmission delay has not expired at a first moment and expires at a second moment, wherein the first moment is the end time point of the currently scheduling period, and the second moment is one of following: the start time point of the next scheduling period, and the end time point of the next scheduling period; or
the first delay expiration indication bitmap field is set to a fourth value, indicating buffer traffic corresponding to a target TID or a target TID of a target AC whose transmission delay has not expired at a first moment and expires at a second moment, wherein the first moment is the start time point of the next scheduling period, and the second moment is the end time point of the next scheduling period;
wherein the target AC is an AC to which a TID of the delay-sensitive service belongs, the target TID is a TID of the delay-sensitive service, and the scheduling period is used to schedule transmission of the delay-sensitive service.

27. The method according to any one of claims 22 to 26, wherein
the service period-based field is set to a first value, indicating that the preset urgency requirement or range is not represented based on a service period, and the scaling factor field and the delay expiration time difference bound field are used to represent the preset urgency requirement or range; or
the service period-based field is set to a second value, indicating that the preset urgency requirement or range is represented based on a service period, and the first delay expiration indication bitmap field is used to represent the preset urgency requirement or range.

28. The method according to any one of claims 18 to 27, wherein
the first BSR is carried in a first BSR control field;
the first BSR control field comprises at least one of following: an access category index bitmap field, a delta traffic identifier field, a high priority access category index field, a first queue field, or a second queue field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the high priority access category index field is used to indicate an AC to which a TID of a delay-sensitive service corresponding to a BSR indicated by the first queue field belongs, the first queue field is used to indicate a buffer traffic size that is to be sent to a target device and meets the preset urgency requirement or range and that corresponds to a TID of a delay-sensitive service in an AC indicated by the high priority access category field, and the second queue field is used to indicate a buffer traffic size that is to be sent to the target device and meets the preset urgency requirement or range and that corresponds to TIDs of delay-sensitive services in all ACs indicated by the access category index bitmap field; and
the target device is identified by a receiver address of a frame comprising the first BSR control field, and the preset urgency requirement or range is indicated by the trigger frame sent by the second station.

29. The method according to claim 28, wherein the first BSR control field is a new BSR control subfield variant.

30. The method according to claim 29, wherein the method further comprises:
determining, by the first station, to use the new BSR control subfield variant to report the first BSR in a case that the first station receives the trigger frame sent by the second station and the trigger frame instructs the first station to report a buffer status report that is based on the urgency of the to-be-transmitted data.

31. The method according to any one of claims 1 to 27, wherein
the first BSR is carried in a second BSR control field;
the second BSR control field comprises at least one of following: an access category index bitmap field, a delta traffic identifier field, a service period-based field, a second delay expiration indication bitmap field, a scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the second delay expiration indication bitmap field is used to indicate target buffer traffic associated with TIDs of delay-sensitive services in all ACs indicated by the buffer specific traffic size field, the scaling factor field is used to indicate a unit corresponding to the buffer specific traffic size field, and the buffer specific traffic size field is used to indicate a buffer traffic size that is to be sent to a target device and meets the preset urgency requirement or range and that corresponds to the TIDs of the delay-sensitive services in all the ACs indicated by the access category index bitmap field; and
the target device is identified by a receiver address of a frame comprising the second BSR control field, and the preset urgency requirement or range is indicated by the second delay expiration indication bitmap field.

32. The method according to claim 31, wherein
the second delay expiration indication bitmap field is set to a first value, indicating that the target buffer traffic is buffer traffic corresponding to all target TIDs or target TIDs of all target ACs;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, wherein the first moment is the current moment, and the second moment is the end time point of the currently allocated service period, the start time point of the next allocated service period, or the end time point of the next allocated service period;
the second delay expiration indication bitmap field is set to a fourth value, indicating that the target buffer traffic is buffer traffic corresponding to a target TID or a target TID of a target AC whose transmission delay has not expired at a first moment and expires at a second moment, wherein the first moment is the end time point of the currently allocated service period, and the second moment is one of following: the start time point of the next allocated service period, and the end time point of the next allocated service period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, wherein the first moment is the start time point of the next allocated service period, and the second moment is the end time point of the next allocated service period;
wherein the target AC is an AC to which a TID of the delay-sensitive service belongs, and the target TID is a TID of the delay-sensitive service.

33. The method according to claim 31, wherein
the second delay expiration indication bitmap field is set to a first value, indicating that the target buffer traffic is buffer traffic corresponding to all target TIDs or target TIDs of all target ACs;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, wherein the first moment is the current moment, and the second moment is one of following: the end time point of the current scheduling period, the start time point of the next scheduling period, and the end time point of the next scheduling period;
the second delay expiration indication bitmap field is set to a fourth value, indicating that the target buffer traffic is buffer traffic corresponding to a target TID or a target TID of a target AC whose transmission delay has not expired at a first moment and expires at a second moment, wherein the first moment is the end time point of the currently scheduling period, and the second moment is one of following: the start time point of the next scheduling period, and the end time point of the next scheduling period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, wherein the first moment is the start time point of the next scheduling period, and the second moment is the end time point of the next scheduling period;
wherein the target AC is an AC to which a TID of the delay-sensitive service belongs, the target TID is a TID of the delay-sensitive service, and the scheduling period is used to schedule transmission of the delay-sensitive service.

34. The method according to any one of claims 31 to 33, wherein the second BSR control field is a BSR control subfield based on the urgency of the to-be-transmitted data.

35. The method according to any one of claims 1 to 27, wherein
the first BSR is carried in a third BSR control field;
the third BSR control field comprises at least one of following: an access category index bitmap field, a delta traffic identifier field, a service period-based field, a delay expiration time difference bound field, a delay scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the delay scaling factor field is used to indicate a unit corresponding to the delay expiration time difference bound field, the delay expiration time difference bound field is used to indicate a preset urgency requirement or range needing to be met by buffer data corresponding to to-be-reported status report information, the buffer traffic scaling factor field is used to indicate a unit corresponding to the buffer specific traffic size field, and the buffer specific traffic size field is used to indicate a buffer traffic size that is to be sent to a target device and meets the preset urgency requirement or range and that corresponds to TIDs of delay-sensitive services in all ACs indicated by the access category index bitmap field; and
the target device is identified by a receiver address of a frame comprising the third BSR control field, and the preset urgency requirement or range is indicated by the delay expiration time difference bound field.

36. The method according to claim 35, wherein
the delay expiration time difference bound field indicates status report information reported by the first station and corresponding to delay-sensitive service data whose delay expiration time difference is less than or equal to the delay expiration time difference bound in the buffer.

37. The method according to claim 35 or 36, wherein the third BSR control field is a BSR control subfield based on the urgency of the to-be-transmitted data.

38. The method according to any one of claims 3 to 6, 12, 20, 22 to 27, and 31 to 37, wherein the service period is a restricted target wake time r-TWT service period, and the first station is an r-TWT scheduled station.

39. The method according to claim 9, 24, or 36, wherein
the delay expiration time difference is a time difference of the delay-sensitive service data between the current moment and a transmission delay expiration time point of the delay-sensitive service data; or the delay expiration time difference is a time difference of the delay-sensitive service data between a target moment and a transmission delay expiration time point of the delay-sensitive service data.

40. The method according to claim 3, 4, 5, 6, 25, 26, 32, or 33, wherein
the transmission delay expiration time point is a time point when duration of a delay bound elapses after a time point at which an MSDU or A-MSDU belonging to a delay-sensitive service flow arrives at a MAC sublayer from a local media access control MAC service access point; and
the delay bound is maximum duration allowed for transmitting the MSDU or A-MSDU.

41. The method according to claim 4, 5, 6, 25, 26, 32, or 33, wherein
that the transmission delay has expired means that a delay expiration time difference of a to-be-transmitted MSDU or A-MSDU relative to the current moment is less than or equal to zero, or that the transmission delay has expired means that a delay expiration time difference of a to-be-transmitted MSDU or A-MSDU relative to the current moment is less than a delay expiration deviation threshold; and/or
the transmission delay expiration means that a delay expiration time difference of a to-be-transmitted MSDU or A-MSDU relative to a target moment is less than or equal to zero, or the transmission delay expiration means that a delay expiration time difference of a to-be-transmitted MSDU or A-MSDU relative to a target moment is less than a delay expiration deviation threshold; and/or
that the transmission delay has not expired means that a delay expiration time difference of a to-be-transmitted MSDU or A-MSDU relative to a target moment is greater than zero, or that the transmission delay has not expired means that a delay expiration time difference of a to-be-transmitted MSDU or A-MSDU relative to the target moment is greater than or equal to a delay expiration deviation threshold.

42. The method of claim 41, wherein the delay expiration deviation threshold is a time interval between a start point of transmission and a time point of confirmed successful transmission of the MSDU or A-MSDU.

43. The method according to any one of claims 1 to 42, wherein
the first station is a non-access point station non-AP STA, and the second station is an access point station AP STA.

44. The method according to any one of claims 1 to 17 and 31 to 43, wherein
the first station is a non-AP STA, and the second station is another non-AP STA; or
the first station is an AP STA, and the second station is another AP STA.

45. A wireless communication method, comprising:
receiving, by a second station, a first buffer status report BSR sent by a first station;
wherein the first BSR comprises at least first status report information, and the first status report information is buffer status report information based on urgency of to-be-transmitted data.

46. The method according to claim 45, wherein the first status report information comprises status report information of delay-sensitive service data in a buffer that meets a preset urgency requirement or range.

47. The method according to claim 46, wherein
the preset urgency requirement or range is represented based on status report information of delay-sensitive service data in a buffer with transmission delay expiration associated in a service period; or
the preset urgency requirement or range is represented based on status report information of delay-sensitive service data in a buffer with transmission delay expiration associated in a scheduling period, wherein the scheduling period is used to schedule transmission of a delay-sensitive service.

48. The method according to claim 47, wherein the first status report information specifically comprises at least one of following:
a data size of a delay-sensitive service whose transmission delay has expired in the buffer, or a data size of a delay-sensitive service whose transmission delay has not expired at a first moment and expires at a second moment in the buffer.

49. The method according to claim 48, wherein the second moment is later than the first moment.

50. The method according to claim 49, wherein
the first moment is a current moment, and the second moment is one of following: an end time point of a currently allocated service period, a start time point of a next allocated service period, and an end time of the next allocated service period; or
the first moment is an end time point of a currently allocated service period, and the second moment is one of following: a start time point of a next allocated service period, and an end time point of the next allocated service period; or
the first moment is a start time point of a next allocated service period, and the second moment is an end time point of the next allocated service period.

51. The method according to claim 49, wherein
the first moment is a current moment, and the second moment is one of following: an end time point of a current scheduling period, a start time point of a next scheduling period, and an end time point of the next scheduling period; or
the first moment is an end time point of a current scheduling period, and the second moment is one of following: a start time point of a next scheduling period, and an end time point of a next scheduling period; or
the first moment is a start time point of a next scheduling period, and the second moment is an end time point of the next scheduling period;
wherein the scheduling period is used to schedule transmission of the delay-sensitive service.

52. The method according to claim 46, wherein the preset urgency requirement or range is represented based on status report information of delay-sensitive service data in a buffer with a delay expiration time difference bound range.

53. The method according to claim 52, wherein the first status report information specifically comprises a data size of a delay-sensitive service, whose delay expiration time difference is less than or equal to the delay expiration time difference bound, in a buffer.

54. The method according to claim 52 or 53, wherein
the delay expiration time difference bound is configured or indicated by the second station, or the delay expiration time difference bound is agreed upon by a protocol.

55. The method according to any one of claims 45 to 54, wherein
data associated with the first status report information is data of a media access control service data unit MSDU or an aggregated media access control service data unit A-MSDU corresponding to a target traffic identifier TID of a target access category AC in the buffer; and/or data associated with the first status report information is data of an MSDU or A-MSDU corresponding to a target TID in the buffer;
wherein the target AC is an AC to which a TID of the delay-sensitive service belongs, and the target TID is a TID of the delay-sensitive service.

56. The method according to any one of claims 45 to 55, wherein
the receiving, by a second station, a first BSR sent by a first station comprises:
receiving, by the second station, the first BSR sent by the first station in a service period; or
receiving, by the second station, the first BSR sent by the first station outside a service period; or
receiving, by the second station, the first BSR sent by the first station in a scheduling period in which the second station schedules transmission of the delay-sensitive service; or
receiving, by the second station, the first BSR sent by the first station between two scheduling periods in which the second station schedules transmission of the delay-sensitive service.

57. The method according to claim 56, wherein a restricted target wake time r-TWT protocol is established between the first station and the second station, the service period is an r-TWT service period, and the first station is an r-TWT scheduled station corresponding to the r-TWT service period.

58. The method according to any one of claims 45 to 57, wherein
the receiving, by a second station, a first BSR sent by a first station comprises:
receiving, by the second station, the first BSR sent by the first station after the first station establishes a stream classification service SCS stream by sending an SCS request carrying a quality of service QoS characteristics element;
wherein the QoS characteristics element comprises a recommended parameter for meeting a transmission requirement of the delay-sensitive service.

59. The method according to claim 58, wherein the recommended parameter for meeting the transmission requirement of the delay-sensitive services comprises at least one of following: a direction, a TID, a minimum service interval, a maximum service interval, a minimum data rate, or a delay bound.

60. The method according to any one of claims 45 to 59, wherein
the receiving, by a second station, a first BSR sent by a first station comprises:
receiving, by the second station, the first BSR proactively sent by the first station; or
receiving, by the second station, the first BSR sent by the first station based on triggering from the second station.

61. The method according to claim 60, wherein
in a case that the first station proactively sends the first BSR to the second station, the first station adds the first BSR to a BSR control subfield that is based on the urgency of the to-be-transmitted data and that is in any frame to be transmitted to the second station.

62. The method according to claim 60, wherein
in a case that the first station sends the first BSR to the second station based on the triggering from the second station, a trigger frame sent by the second station is a buffer status report poll trigger frame based on the urgency of the to-be-transmitted data.

63. The method according to claim 62, wherein
the first station adds, according to a preset urgency requirement or range indicated in the trigger frame, the first BSR to a new BSR control subfield variant of any frame to be transmitted to the second station in response to the trigger frame; or
the first station adds, according to a preset urgency requirement or range indicated in the trigger frame, the first BSR to a BSR control subfield that is based on the urgency of the to-be-transmitted data and that is in any frame to be transmitted to the second station in response to the trigger frame.

64. The method according to claim 62 or 63, wherein
the trigger frame comprises at least one of following: indication information for indicating the preset urgency requirement or range, indication information for indicating whether to trigger reporting of status report information of all delay-sensitive service data in the buffer, or indication information for indicating whether to represent the preset urgency requirement or range based on a service period.

65. The method according to any one of claims 62 to 64, wherein
the trigger frame comprises a trigger type field, wherein the trigger type field is used to indicate that the trigger frame is a buffer status report poll trigger frame based on the urgency of the to-be-transmitted data.

66. The method according to any one of claims 62 to 65, wherein
the trigger frame comprises a trigger dependent common information field;
the trigger dependent common information field comprises at least one of following: an all indication field, a service period-based field, a scaling factor field, or a delay expiration time difference bound field; or the trigger dependent common information field comprises at least one of following: an all indication field, a service period-based field, or a first delay expiration indication bitmap field; and
the all indication field is used to indicate whether to trigger status report information of all delay-sensitive service data in a buffer of the first station, the service period-based field is used to indicate whether to represent the preset urgency requirement or range based on the service period, the scaling factor field is used to indicate a unit of the delay expiration time difference bound field, the delay expiration time difference bound field is used to indicate a preset urgency requirement or range needing to be met by buffer data corresponding to to-be-reported status report information, and the first delay expiration indication bitmap field is used to indicate the preset urgency requirement or range needing to be met by the buffer data corresponding to the to-be-reported status report information.

67. The method according to claim 66, wherein
the all indication field is set to a first value, indicating triggering of status report information, reported by the first station, of all delay-sensitive service data in the buffer; or the all indication field is set to a second value, indicating triggering of status report information, reported by the first station, of delay-sensitive service data in the buffer that meets the preset urgency requirement or range.

68. The method according to claim 66 or 67, wherein
the delay expiration time difference bound field indicates status report information reported by the first station and corresponding to delay-sensitive service data whose delay expiration time difference is less than or equal to the delay expiration time difference bound in the buffer.

69. The method according to claim 66 or 67, wherein
the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, wherein the first moment is the current moment, and the second moment is one of following: the end time point of the currently allocated service period, the start time point of the next allocated service period, and the end time point of the next allocated service period;
the first delay expiration indication bitmap field is set to a third value, indicating buffer traffic corresponding to a target TID or a target TID of a target AC whose transmission delay has not expired at a first moment and expires at a second moment, wherein the first moment is the end time point of the currently allocated service period, and the second moment is one of following:
the start time point of the next allocated service period, and the end time point of the next allocated service period; or
the first delay expiration indication bitmap field is set to a fourth value, indicating buffer traffic corresponding to a target TID or a target TID of a target AC whose transmission delay has not expired at a first moment and expires at a second moment, wherein the first moment is the start time point of the next allocated service period, and the second moment is the end time point of the next allocated service period;
wherein the target AC is an AC to which a TID of the delay-sensitive service belongs, and the target TID is a TID of the delay-sensitive service.

70. The method according to claim 66 or 67, wherein
the first delay expiration indication bitmap field is set to a first value, indicating buffer traffic corresponding to a target TID or a target TID of a target AC whose transmission delay has expired at the current moment;
the first delay expiration indication bitmap field is set to a second value, indicating buffer traffic corresponding to a target TID or a target TID of a target AC whose transmission delay has not expired at a first moment and expires at a second moment, wherein the first moment is the current moment, and the second moment is one of following: the end time point of the current scheduling period, the start time point of the next scheduling period, and the end time point of the next scheduling period;
the first delay expiration indication bitmap field is set to a third value, indicating buffer traffic corresponding to a target TID or a target TID of a target AC whose transmission delay has not expired at a first moment and expires at a second moment, wherein the first moment is the end time point of the currently scheduling period, and the second moment is one of following: the start time point of the next scheduling period, and the end time point of the next scheduling period; or
the first delay expiration indication bitmap field is set to a fourth value, indicating buffer traffic corresponding to a target TID or a target TID of a target AC whose transmission delay has not expired at a first moment and expires at a second moment, wherein the first moment is the start time point of the next scheduling period, and the second moment is the end time point of the next scheduling period;
wherein the target AC is an AC to which a TID of the delay-sensitive service belongs, the target TID is a TID of the delay-sensitive service, and the scheduling period is used to schedule transmission of the delay-sensitive service.

71. The method according to any one of claims 66 to 70, wherein
the service period-based field is set to a first value, indicating that the preset urgency requirement or range is not represented based on a service period, and the scaling factor field and the delay expiration time difference bound field are used to represent the preset urgency requirement or range; or
the service period-based field is set to a second value, indicating that the preset urgency requirement or range is represented based on a service period, and the first delay expiration indication bitmap field is used to represent the preset urgency requirement or range.

72. The method according to any one of claims 66 to 71, wherein
the first BSR is carried in a first BSR control field;
the first BSR control field comprises at least one of following: an access category index bitmap field, a delta traffic identifier field, a high priority access category index field, a first queue field, or a second queue field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the high priority access category index field is used to indicate an AC to which a TID of a delay-sensitive service corresponding to a BSR indicated by the first queue field belongs, the first queue field is used to indicate a buffer traffic size that is to be sent to a target device and meets the preset urgency requirement or range and that corresponds to a TID of a delay-sensitive service in an AC indicated by the high priority access category field, and the second queue field is used to indicate a buffer traffic size that is to be sent to the target device and meets the preset urgency requirement or range and that corresponds to TIDs of delay-sensitive services in all ACs indicated by the access category index bitmap field; and
the target device is identified by a receiver address of a frame comprising the first BSR control field, and the preset urgency requirement or range is indicated by the trigger frame sent by the second station.

73. The method according to claim 72, wherein the first BSR control field is a new BSR control subfield variant.

74. The method according to claim 73, wherein using, by the first station, the new BSR control subfield variant to report the first BSR in a case that the first station receives the trigger frame sent by the second station and the trigger frame instructs the first station to report a buffer status report that is based on the urgency of the to-be-transmitted data.

75. The method according to any one of claims 45 to 71, wherein
the first BSR is carried in a second BSR control field;
the second BSR control field comprises at least one of following: an access category index bitmap field, a delta traffic identifier field, a service period-based field, a second delay expiration indication bitmap field, a scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the second delay expiration indication bitmap field is used to indicate target buffer traffic associated with TIDs of delay-sensitive services in all ACs indicated by the buffer specific traffic size field, the scaling factor field is used to indicate a unit corresponding to the buffer specific traffic size field, and the buffer specific traffic size field is used to indicate a buffer traffic size that is to be sent to a target device and meets the preset urgency requirement or range and that corresponds to the TIDs of the delay-sensitive services in all the ACs indicated by the access category index bitmap field; and
the target device is identified by a receiver address of a frame comprising the second BSR control field, and the preset urgency requirement or range is indicated by the second delay expiration indication bitmap field.

76. The method according to claim 75, wherein
the second delay expiration indication bitmap field is set to a first value, indicating that the target buffer traffic is buffer traffic corresponding to all target TIDs or target TIDs of all target ACs;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, wherein the first moment is the current moment, and the second moment is the end time point of the currently allocated service period, the start time point of the next allocated service period, or the end time point of the next allocated service period;
the second delay expiration indication bitmap field is set to a fourth value, indicating that the target buffer traffic is buffer traffic corresponding to a target TID or a target TID of a target AC whose transmission delay has not expired at a first moment and expires at a second moment, wherein the first moment is the end time point of the currently allocated service period, and the second moment is one of following: the start time point of the next allocated service period, and the end time point of the next allocated service period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, wherein the first moment is the start time point of the next allocated service period, and the second moment is the end time point of the next allocated service period;
wherein the target AC is an AC to which a TID of the delay-sensitive service belongs, and the target TID is a TID of the delay-sensitive service.

77. The method according to claim 75, wherein
the second delay expiration indication bitmap field is set to a first value, indicating that the target buffer traffic is buffer traffic corresponding to all target TIDs or target TIDs of all target ACs;
the second delay expiration indication bitmap field is set to a second value, indicating that the target buffer traffic is buffer traffic corresponding to a target TID or a target TID of a target AC whose transmission delay has expired at the current moment;
the second delay expiration indication bitmap field is set to a third value, indicating that the target buffer traffic is buffer traffic corresponding to a target TID or a target TID of a target AC whose transmission delay has not expired at a first moment and expires at a second moment, wherein the first moment is the current moment, and the second moment is one of following: the end time point of the current scheduling period, the start time point of the next scheduling period, and the end time point of the next scheduling period;
the second delay expiration indication bitmap field is set to a fourth value, indicating that the target buffer traffic is buffer traffic corresponding to a target TID or a target TID of a target AC whose transmission delay has not expired at a first moment and expires at a second moment, wherein the first moment is the end time point of the currently scheduling period, and the second moment is one of following: the start time point of the next scheduling period, and the end time point of the next scheduling period; or
the second delay expiration indication bitmap field is set to a fifth value, indicating that the target buffer traffic is buffer traffic corresponding to a target TID or a target TID of a target AC whose transmission delay has not expired at a first moment and expires at a second moment, wherein the first moment is the start time point of the next scheduling period, and the second moment is the end time point of the next scheduling period;
wherein the target AC is an AC to which a TID of the delay-sensitive service belongs, the target TID is a TID of the delay-sensitive service, and the scheduling period is used to schedule transmission of the delay-sensitive service.

78. The method according to any one of claims 75 to 77, wherein the second BSR control field is a BSR control subfield based on the urgency of the to-be-transmitted data.

79. The method according to any one of claims 45 to 71, wherein
the first BSR is carried in a third BSR control field;
the third BSR control field comprises at least one of following: an access category index bitmap field, a delta traffic identifier field, a service period-based field, a delay expiration time difference bound field, a delay scaling factor field, or a buffer specific traffic size field;
the access category index bitmap field is used to indicate an AC to which a TID of a delay-sensitive service with a reported buffer status belongs, the delta traffic identifier field and the access category index bitmap field are used together to indicate a quantity of TIDs of a delay-sensitive service with a buffer status being reported by the first station, the service period-based field is used to indicate whether the preset urgency requirement or range is represented based on a service period, the delay scaling factor field is used to indicate a unit corresponding to the delay expiration time difference bound field, the delay expiration time difference bound field is used to indicate a preset urgency requirement or range needing to be met by buffer data corresponding to to-be-reported status report information, the buffer traffic scaling factor field is used to indicate a unit corresponding to the buffer specific traffic size field, and the buffer specific traffic size field is used to indicate a buffer traffic size that is to be sent to a target device and meets the preset urgency requirement or range and that corresponds to TIDs of delay-sensitive services in all ACs indicated by the access category index bitmap field; and
the target device is identified by a receiver address of a frame comprising the third BSR control field, and the preset urgency requirement or range is indicated by the delay expiration time difference bound field.

80. The method according to claim 79, wherein
the delay expiration time difference bound field indicates status report information reported by the first station and corresponding to delay-sensitive service data whose delay expiration time difference is less than or equal to the delay expiration time difference bound in the buffer.

81. The method according to claim 79 or 80, wherein the third BSR control field is a BSR control subfield based on the urgency of the to-be-transmitted data.

82. The method according to any one of claims 47 to 50, 56, 64, 66 to 71, and 75 to 81, wherein the service period is a restricted target wake time r-TWT service period, and the first station is an r-TWT scheduled station.

83. The method according to claim 53, 68, or 80, wherein
the delay expiration time difference is a time difference of the delay-sensitive service data between the current moment and a transmission delay expiration time point of the delay-sensitive service data; or the delay expiration time difference is a time difference of the delay-sensitive service data between a target moment and a transmission delay expiration time point of the delay-sensitive service data.

84. The method according to claim 47, 48, 49, 50, 69, 70, 76, or 77, wherein
the transmission delay expiration time point is a time point when duration of a delay bound elapses after a time point at which an MSDU or A-MSDU belonging to a delay-sensitive service flow arrives at a MAC sublayer from a local media access control MAC service access point; and
the delay bound is maximum duration allowed for transmitting the MSDU or A-MSDU.

85. The method according to claim 48, 49, 50, 69, 70, 76, or 77, wherein
that the transmission delay has expired means that a delay expiration time difference of a to-be-transmitted MSDU or A-MSDU relative to the current moment is less than or equal to zero, or that the transmission delay has expired means that a delay expiration time difference of a to-be-transmitted MSDU or A-MSDU relative to the current moment is less than a delay expiration deviation threshold; and/or
the transmission delay expiration means that a delay expiration time difference of a to-be-transmitted MSDU or A-MSDU relative to a target moment is less than or equal to zero, or the transmission delay expiration means that a delay expiration time difference of a to-be-transmitted MSDU or A-MSDU relative to a target moment is less than a delay expiration deviation threshold; and/or
that the transmission delay has not expired means that a delay expiration time difference of a to-be-transmitted MSDU or A-MSDU relative to a target moment is greater than zero, or that the transmission delay has not expired means that a delay expiration time difference of a to-be-transmitted MSDU or A-MSDU relative to the target moment is greater than or equal to a delay expiration deviation threshold.

86. The method of claim 85, wherein the delay expiration deviation threshold is a time interval between a start point of transmission and a time point of confirmed successful transmission of the MSDU or A-MSDU.

87. The method according to any one of claims 45 to 86, wherein
the first station is a non-access point station non-AP STA, and the second station is an access point station AP STA.

88. The method according to any one of claims 45 to 61 and 75 to 87, wherein
the first station is a non-AP STA, and the second station is another non-AP STA; or
the first station is an AP STA, and the second station is another AP STA.

89. A station device, wherein the station device is a first station, and the station device comprises:
a communication unit, configured to send a first buffer status report BSR to a second station;
wherein the first BSR comprises at least first status report information, and the first status report information is buffer status report information based on urgency of to-be-transmitted data.

90. A station device, wherein the station device is a second station, and the station device comprises:
a communication unit, configured to receive a first buffer status report BSR sent by a first station;
wherein the first BSR comprises at least first status report information, and the first status report information is buffer status report information based on urgency of to-be-transmitted data.

91. A station device, comprising a processor, a memory, and a transceiver, wherein the transceiver is configured to receive and send information, the memory is configured to store a computer program, and the processor is configured to invoke and run the computer program stored in the memory to cause the station device to perform the method according to any one of claims 1 to 44.

92. A station device, comprising a processor, a memory, and a transceiver, wherein the transceiver is configured to receive and send information, the memory is configured to store a computer program, and the processor is configured to invoke and run the computer program stored in the memory to cause the station device to perform the method according to any one of claims 45 to 88.

93. A chip, comprising a processor, configured to invoke and run a computer program from a memory, to cause a device installed with the chip to perform the method according to any one of claims 1 to 44.

94. A chip, comprising a processor, configured to invoke and run a computer program from a memory, to cause a device installed with the chip to perform the method according to any one of claims 45 to 88.

95. A computer-readable storage medium, configured to store a computer program, wherein the computer program causes a computer to perform the method according to any one of claims 1 to 44.

96. A computer-readable storage medium, configured to store a computer program, wherein the computer program causes a computer to perform the method according to any one of claims 45 to 88.

97. A computer program product, comprising computer program instructions that cause a computer to perform the method according to any one of claims 1 to 44.

98. A computer program product, comprising computer program instructions that cause a computer to perform the method according to any one of claims 45 to 88.

99. A computer program, wherein the computer program causes a computer to perform the method according to any one of claims 1 to 44.

100. A computer program, wherein the computer program causes a computer to perform the method according to any one of claims 45 to 88.
